(19) Europäisches Patentamt
European Patent Office
Office européen des brevets

(11) EP 4 249 388 B1

(12) EUROPEAN PATENT SPECIFICATION

(45) Date of publication and mention of the grant of the patent:
**19.06.2024 Bulletin 2024/25**

(21) Application number: **22163881.0**

(22) Date of filing: **23.03.2022**

(51) International Patent Classification (IPC):
***B65D 43/16*** *(2006.01)* ***C08F 210/06*** *(2006.01)*
***C08L 23/14*** *(2006.01)* ***C08F 4/659*** *(2006.01)*

(52) Cooperative Patent Classification (CPC):
(C-Sets available)
**C08F 210/06; C08L 23/14;** B65D 43/162;
C08F 4/65908; C08F 4/65912; C08F 4/65916;
C08F 2420/07; C08L 2205/025; C08L 2205/24

(Cont.)

(54) **LIVING HINGE OF AN ALPHA-NUCLEATED PROPYLENE COPOLYMER**

LEBENDES SCHARNIER AUS EINEM ALPHA-NUKLEIERTEN PROPYLENCOPOLYMER

CHARNIÈRE VIVANTE D’UN COPOLYMÈRE DE PROPYLÈNE À NUCLÉATION ALPHA

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.09.2023 Bulletin 2023/39**

(73) Proprietor: **Borealis AG**
**1020 Vienna (AT)**

(72) Inventors:
- **WANG, Jingbo**
  **4021 Linz (AT)**
- **GAHLEITNER, Markus**
  **4021 Linz (AT)**
- **BERNREITNER, Klaus**
  **4021 Linz (AT)**
- **LESKINEN, Pauli**
  **06101 Porvoo (FI)**
- **NICOLUSSI, Dieter**
  **4021 Linz (AT)**

(74) Representative: **Maiwald GmbH**
**Elisenhof**
**Elisenstraße 3**
**80335 München (DE)**

(56) References cited:
**EP-A1- 2 439 238**
**EP-A1- 3 950 739**
**WO-A1-2021/185924**
**US-A1- 2013 324 661**
**US-A1- 2020 332 103**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/06, C08F 4/65927;**
**C08L 23/14, C08L 23/14, C08K 5/0083;**
C08F 210/06, C08F 210/08, C08F 2500/12,
C08F 2500/35, C08F 2500/27;
C08F 210/06, C08F 210/08, C08F 2500/12,
C08F 2500/35, C08F 2500/27, C08F 2500/34,
C08F 2500/33, C08F 2500/31, C08F 2500/30,
C08F 2500/03

## Description

The present invention is directed to a living hinge consisting of a polypropylene composition comprising at least 95.0 wt.-% of a propylene copolymer and 0.1 to 1.0 wt.-% of an alpha-nucleating agent, as well as to injection molded articles comprising two rigid pieces which are connected with at least one living hinge.

A living hinge is a thin, flexible hinge connecting two relatively rigid parts. Typically, it is made from the same material as the rigid parts. It is especially preferred that the living hinge and the rigid parts are one piece, i.e. produced in one process, typically by injection molding. The living hinge may be used to join rigid parts of a container, allowing them to bend along the line of the hinge. Polypropylene has an especially good reputation for the use as living hinges, where its combination of stiffness and flexibility allows hundreds of cycles without breakage. Accordingly living hinges are an integral part of modern packaging systems, like in sports-drink or cosmetics closures, but also in longer lasting articles like household or hiking equipment. EP 2 439 238 A1 for instance discloses suitable polypropylene compositions for producing flexible hinges.

Regarding such packaging systems there is the need to balance hinge performance (especially flexibility) with stiffness, transparency and solubles content. There is, consequently, still a need for a next generation of materials with an improved property balance.

The finding of the present invention is to provide a living hinge consisting of a polypropylene composition which comprises as main component a propylene copolymer (at least 95.0 wt.-% of the polypropylene composition) and 0.01 to 1.0 wt.-% of an alpha-nucleating agent, wherein said propylene copolymer has been produced in the presence of a metallocene catalyst and therefore has 2,1 erythro regio-defects in the range of >0.35 to 0.85 mol-%, measured by $^{13}C$ NMR and the comonomer of the propylene copolymer is a higher alpha-alkene, i.e. 1-butene, 1-hexene or 1-octene.

Accordingly, the present invention is directed to

a living hinge consisting of a polypropylene composition comprising

(a) at least 95.0 wt.-%, preferably at least 97.0 wt.-%, based on the total weight of the polypropylene composition, of a propylene copolymer, said propylene copolymer has a comonomer selected from the group consisting of 1-butene, 1-hexene and 1-octene, preferably said propylene copolymer is a 1-butene-propylene copolymer, and
(b) 0.01 to 1.0 wt.-%, preferably 0.05 to 0.5 wt.-%, based on the total weight of the polypropylene composition, of an alpha-nucleating agent,

wherein further the polypropylene composition has

(ii) a comonomer content, measured by $^{13}C$-NMR, is in the range of 2.0 to 6.5 mol-%, the comonomer is selected from the group consisting of 1-butene, 1-hexene and 1-octene, preferably the comonomer is 1-butene,
(iii) 2,1 erythro regio-defects, measured by $^{13}C$ NMR, in the range of >0.35 to 0.85 mol-% and
(iv) a melt flow rate $MFR_2$ (230 °C; 2.16 kg), measured according to ISO 1133, in the range of 15 to 100 g/10min.

Preferred embodiments of the polypropylene composition from which the living hinge is produced is defined in the dependent claims to claim 1.

The invention is further directed to an injection molded article, preferably a thin wall injection molded article having a wall thickness up to 2.00 mm, comprising two rigid pieces which are connected by at least one living hinge, wherein

the injection molded article consists of the polypropylene composition as defined in any one of the claims 1 to 11 and the injection molded article is made as a single piece.

The present invention is further directed to an injection molded article as defined in the previous paragraph, wherein the two rigid pieces are compartments which are connected by the at least one living hinge, preferably said injection molded article is a storage box.

The present invention is further directed to an injection molded article comprising two rigid pieces which are connected by at least one living hinge, wherein

the injection molded article consists of the polypropylene composition as defined in any one of the claims 1 to 9 and the injection molded article is made as a single piece
wherein further
the injection molded article is a hinge cap, wherein one rigid piece is the cap and the other rigid piece is the mount.

Finally the present invention is directed the use of the polypropylene composition as defined in any one of the claims 1 to 9 for the manufacture of a living hinge or an injection molded article including at least one living hinge, wherein preferably the injection molded article is a thin wall injection molded article having a wall thickness up to 2.00 mm, preferably having a wall thickness in the range of 0.05 to 2.00 mm. Preferably the living hinge is an injection molded living hinge, i.e. obtained by injection molding the polypropylene composition as defined in any one of the claims 1 to 9. Preferably the polypropylene composition as defined in any one of the claims 1 to 9 is used for the manufacture of an injection molded article including at least one living hinge, wherein said injection molded article is one piece.

In the following, the invention is defined in more detail.

## Living hinge / injection molded article

The living hinge according to this invention is understood as by a skilled person, i.e. as a thin, flexible hinge typically connecting two relatively rigid parts. The living hinge according to this invention is preferably made by injection molding. It is further preferred that the thickness of the living hinge is considerable thinner than the rigid parts which are typically connected by the living hinge. Accordingly the living hinge has preferably a thickness in the range of 0.05 to 0.50 mm, more preferably in the range of 0.08 to 0.40 mm, like in the range of 0.10 to 0.35 mm.

Further, the living hinge according to this invention consists of the polypropylene composition as defined in more detail below. That is, the living hinge is made from the polypropylene composition as defined in more detail below. In a preferred embodiment, the living hinge is made by injection molding, more preferably by thin wall injection molding, from the polypropylene composition as defined in more detail below. The techniques of injection molding and thin wall injection molding in the field of polypropylene is known by the skilled person. Reference is made for instance to the "Polypropylene Handbook" of Nello Pasquini, 2nd edition (pages 422 to 442).

Still more preferably, the invention is directed to an injection molded article comprising two rigid pieces which are connected by at least one living hinge, wherein

the injection molded article consists of the polypropylene composition as defined in more detail below and
the injection molded article is made as a single piece.

That is, the injection molded article in which the two rigid pieces are connected with at least one living hinge is made in one process, i.e. is one single piece, from the polypropylene composition as defined in more detail below.

Preferably, the injection molding process is a thin wall injection molding process and thus the wall thickness of the injection molded article is less than 2.00 mm, preferably in the range of 0.7 to 1.7 mm, more preferably in the range of 0.9 to 1.6 mm. Accordingly it is preferred that the two rigid pieces have a wall thickness in the range of 0.60 to 2.00 mm, more preferably in the range of 0.7 to 1.7 mm, still more preferably in the range of 0.9 to 1.6 mm, and the at least one living hinge has preferably a wall thickness in the range of 0.05 to 0.50 mm.

Preferably the injection molded article, still more preferably the thin wall injection molded article, made from the polypropylene composition as defined in more detail below comprises two compartments which are connected by the at least one living hinge. One specific example of such an injection molded article is a storage box.

In another preferred embodiment the injection molded article comprising two rigid pieces which are connected by at least one living hinge, wherein

the injection molded article consists of the polypropylene composition as defined in more detail below and
the injection molded article is made as a single piece,
is hinge cap, wherein one rigid piece is the cap and the other rigid piece is the mount.

In still another preferred embodiment the present invention is directed to the use of the polypropylene composition as defined below for the manufacture of a living hinge or an injection molded article including at least one living hinge, wherein preferably the injection molded article is a thin wall injection molded article having a wall thickness up to 2.00 mm, preferably in the range of 0.7 to 1.7 mm, more preferably in the range of 0.9 to 1.6 mm. The preferred embodiments which are manufactured by the use of the polypropylene composition according to this invention are defined above.

## The polypropylene composition

The living hinge and the injection molded articles comprising said living hinge are made from the polypropylene composition as defined in the following. First the individual components of the polypropylene composition are described and subsequently the polypropylene composition as such.

**The propylene copolymer**

The by far major part of the polypropylene composition is a propylene copolymer, i.e. at least 95.0 wt.-%, more preferably at least 97.0 wt.-%, of the polypropylene composition is the propylene copolymer.

The comonomer of the propylene copolymer is selected from the group consisting of 1-butene, 1-hexene and 1-octene. More preferably, the propylene copolymer is a 1-butene-propylene copolymer. Preferably said propylene copolymer has a comonomer content in the range of 2.0 to 6.5 mol-%, preferably in the range of 3.0 to 5.5 mol-%, measured by $^{13}C$-NMR. Thus it is especially preferred the propylene copolymer is a 1-butene-propylene copolymer having a 1-butene content in the range of 2.0 to 6.5 mol-%, preferably in the range of 3.0 to 5.5 mol-%, measured by $^{13}C$-NMR.

Further the propylene copolymer according to this invention must be produced with a metallocene catalyst, which is reflected by the presence of 2,1 erythro regio-defects in the polymer chain. Further information regarding the polymerisation conditions is provided in detail below. Accordingly, it is preferred that propylene copolymer according to this invention has 2,1 erythro regio-defects, measured by $^{13}C$ NMR, in the range of >0.35 to 0.85 mol-%, more preferably in the range of 0.4 to 0.75 mol-%.

A further characteristic of the propylene copolymer, due to its manufacture with a metallocene catalyst, is its rather low amounts of xylene cold solubles. Thus it is preferred that the propylene copolymer has a xylene cold soluble (XCS) fraction, determined at 25 °C according to ISO 16152, in the range of 0.1 to 1.0 wt.-%, more preferably in the range of 0.2 to 0.6 wt.-%. A low soluble content is also an indicator that the propylene copolymer is not a heterophasic system but is monophasic. In other words, the propylene copolymer does not comprise polymer components, which are not miscible with each other, as this is the case for heterophasic propylene copolymers. In contrast to monophasic systems, heterophasic systems comprise a continuous polymer phase, like a polypropylene, in which a further non-miscible polymer, like an elastomeric polymer, is dispersed as inclusions. Said polypropylene systems containing a polypropylene matrix and inclusions as a second polymer phase would by contrast be called heterophasic and are not part of the present invention. The presence of second polymer phases or the so-called inclusions is for instance visible by high resolution microscopy, like electron microscopy or atomic force microscopy, or by dynamic mechanical thermal analysis (DMTA). Specifically in DMTA, the presence of a multiphase structure can be identified by the presence of at least two distinct glass transition temperatures.

Further it is preferred that the the propylene copolymer has a molecular weight distribution (MWD), defined as the ratio between the weight average molecular weight (Mw) and the number average molecular weight (Mn) and determined by Gel Permeation Chromatography (GPC) in the range of 2.0 to 5.0, more preferably in the range of 2.1 to 4.5, still more preferably in the range of 2.2 to 3.5.

Additionally the molecular weight of the propylene copolymer must be low enough that a living hinge and the injection moulded article, preferably the thin wall injection moulded article, can be produced. Hence it is preferred that the propylene copolymer has a melt flow rate $MFR_2$ (230 °C; 2.16 kg), measured according to ISO 1133, in the range of 15 to 100 g/10min, more preferably in the range of 16 to 90 g/10min,still more preferably in the range of 17 to 80 g/10 min.

In a preferred embodiment, the propylene copolymer comprises two propylene copolymer fractions. That is, the propylene copolymer comprises

(a) a first propylene copolymer fraction (F1) having a comonomer content, measured by $^{13}C$-NMR, is in the range of 2.0 to 6.5 mol-%, preferably in the range of 2.5 to 5.0 mol-%, measured by $^{13}C$-NMR, and
(b) a second propylene copolymer fraction (F2),

wherein

- the comonomer for the first propylene copolymer fraction (F1) and the second propylene copolymer (F2) is the same, but the amount of comonomer in the first propylene copolymer (F1) and second propylene copolymer (F2) is different;
- the weight ratio between the first propylene copolymer fraction (F1) and the second propylene copolymer fraction (F2) [(F1)/(F2)] is in the range of 60/40 to 40/60, and
- the total amount of the first propylene copolymer fraction (F1) and the second propylene copolymer fraction (F2) together, based on the propylene copolymer, is at least 98 wt.-%, preferably the propylene copolymer consists, of the first propylene copolymer fraction (F1) and the second propylene copolymer fraction (F2).

Still more preferably the propylene copolymer complies with the equation 2, yet more preferably with the equation 2a,

$$\frac{C\,(PPC)}{(C\,(F1)\;x\;[(F1)/(PPC)])} > 2.50 \qquad (2)$$

$$3.50 > \frac{C\ (PPC)}{(C\ (F1)\ x\ [(F1)/(PPC)])} > 2.50 \qquad \text{(2a)}$$

wherein

"C (PPC)" is the comonomer content [mol-%], measured by $^{13}C$ NMR, of the propylene copolymer;
"C (F1)" is the comonomer content [mol-%], measured by $^{13}C$ NMR, of the first propylene copolymer fraction (F1);
"(F1)/(PPC)" is the amount of the first propylene copolymer fraction (F1) in the propylene copolymer divided by the amount of the propylene copolymer.

Accordingly it is further preferred that the comonomer content between the first propylene copolymer fraction (F1) and the second propylene copolymer fraction (F2) differs in the range of 1.0 to 2.5 mol-%.

As mentioned above the propylene copolymer according to this invention must be produced with a metallocene catalyst.

Preferably, the propylene copolymer is produced in a sequential polymerization process using a specific metallocene catalyst. Accordingly, the propylene copolymer must be produced with a metallocene catalyst as disclosed in WO 2019/179959, which is incorporated by reference herewith.

The used metallocene catalyst complexes for the manufacture of the propylene copolymer is in particular defined by formula (I):

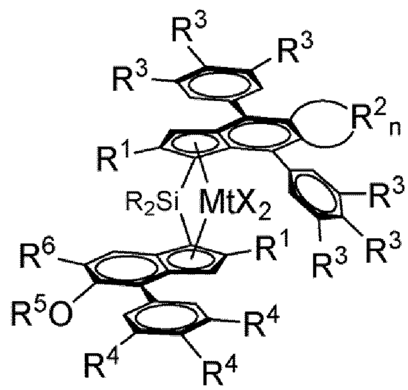

Formula (I)

In a complex of formula (I) it is preferred if Mt is Zr or Hf, preferably Zr; each X is a sigma ligand. Most preferably, each X is independently a hydrogen atom, a halogen atom, $C_1$-$C_6$ alkoxy group or an R' group, where R' is a $C_1$-$C_6$ alkyl, phenyl or benzyl group. Most preferably, X is chlorine, benzyl or a methyl group. Preferably, both X groups are the same. The most preferred options are two chlorides, two methyl or two benzyl groups, especially two chlorides. For further preferred definitions of the residues, reference is made to WO 2019/179959.

Specifically preferred metallocene catalyst complexes are:

rac-anti-dimethylsilanediyl[2-methyl-4,8-bis-(4'-tert-butylphenyl)-1,5,6,7-tetrahydro-s-indacen-1 -yl][2-methyl-4-(3',5'-dimethyl-phenyl)-5-methoxy-6-tert-butylinden-1 -yl] zirconium dichloride (MC-1 );
rac-anti-dimethylsilanediyl[2-methyl-4,8-bis-(3',5'-dimethylphenyl)-1,5,6,7-tetrahydro-s-indacen-1-yl] [2-methyl-4-(3',5'-dimethylphenyl)-5-methoxy-6-tert-butylinden-1 -yl] zirconium dichloride (MC-2);
rac-anti-dimethylsilanediyl[2-methyl-4,8-bis-(3',5'-dimethylphenyl)-1,5,6,7-tetrahydro-s-indacen-1-yl][2-methyl-4-(3',5'-ditert-butyl-phenyl)-5-methoxy-6-tert-butylinden-1-yl] zirconium dichloride (MC-3)

The corresponding zirconium dimethyl analogues of the above defined three catalysts are also possible but less preferred. The most preferred catalyst is the one used for the inventive examples, i.e. MC-2.

<u>Cocatalvst</u>

To form an active catalytic species it is normally necessary to employ a cocatalyst as is well known in the art. Here, a cocatalyst system comprising a boron containing cocatalyst and an aluminoxane cocatalyst is used in combination with the above defined metallocene catalyst complex.

Typical aluminoxane cocatalysts are state of the art. The preferred aluminoxane is methylaluminoxane (MAO). Since the aluminoxanes used according to the invention as cocatalysts are not, owing to their mode of preparation, pure

compounds, the molarity of aluminoxane solutions hereinafter is based on their aluminium content.

As mentioned above the aluminoxane cocatalyst is used in combination with a boron containing cocatalyst.

Boron based cocatalysts of interest include those of formula (Z)

$BY_3$ (Z)

wherein Y is the same or different and is a hydrogen atom, an alkyl group of from 1 to about 20 carbon atoms, an aryl group of from 6 to about 15 carbon atoms, alkylaryl, arylalkyl, haloalkyl or haloaryl each having from 1 to 10 carbon atoms in the alkyl radical and from 6-20 carbon atoms in the aryl radical or fluorine, chlorine, bromine or iodine. Preferred examples for Y are methyl, propyl, isopropyl, isobutyl or trifluoromethyl, unsaturated groups such as aryl or haloaryl like phenyl, tolyl, benzyl groups, p-fluorophenyl, 3,5-difluorophenyl, pentachlorophenyl, pentafluorophenyl, 3,4,5-trifluorophenyl and 3,5-di(trifluoromethyl)phenyl. Preferred options are trifluoroborane, triphenylborane, tris(4-fluorophenyl)borane, tris(3,5-difluorophenyl)borane, tris(4-fluoromethylphenyl)borane, tris(2,4,6-trifluorophenyl)borane, tris(penta-fluorophenyl)borane, tris(tolyl)borane, tris(3,5-dimethyl-phenyl)borane, tris(3,5-difluorophenyl)borane and/or tris (3,4,5-trifluorophenyl)borane. Particular preference is given to tris(pentafluorophenyl)borane.

Preferred ionic compounds which can be used include:
triethylammoniumtetra(phenyl)borate, tributylammoniumtetra(phenyl)borate, trimethylammoniumtetra(tolyl)borate, tributylammoniumtetra(tolyl)borate, tributylammoniumtetra(pentafluorophenyl)borate, tripropylammoniumtetra(dimethylphenyl)borate, tributylammoniumtetra(trifluoromethylphenyl)borate, tributylammoniumtetra(4-fluorophenyl)borate, N,N-dimethylcyclohexylammoniumtetrakis(pentafluorophenyl)borate, N,N-dimethylbenzylammoniumtetrakis(pentafluorophenyl)borate, N,N-dimethylaniliniumtetra(phenyl)borate, N,N-diethylaniliniumtetra(phenyl)borate, N,N-dimethylaniliniumtetrakis(pentafluorophenyl)borate, N,N-di(propyl)ammoniumtetrakis(pentafluorophenyl)borate, di(cyclohexyl)ammoniumtetrakist(pentafluorophenyl)borate, triphenylphosphoniumtetrakis(phenyl)borate, triethylphosphoniumtetrakis(phenyl)borate, diphenylphosphoniumtetrakis(phenyl)borate, tri(methylphenyl)phosphoniumtetrakis(phenyl)borate, tri(dimethylphenyl)phosphoniumtetrakis(phenyl)borate, triphenylcarbeniumtetrakis(pentafluorophenyl)borate, or ferroceniumtetrakis(pentafluorophenyl)borate.

Preference is given to triphenylcarbeniumtetrakis(pentafluorophenyl) borate, N,N-dimethylcyclohexylammoniumtetrakis(pentafluorophenyl)borate or N,N-dimethylbenzylammoniumtetrakis(pentafluorophenyl)borate. Certain boron cocatalysts are especially preferred. Preferred borates comprise the trityl ion. Thus, the use of N,N-dimethylammoniumtetrakispentafluorophenylborate and $Ph_3CB(PhF_5)_4$ and analogues therefore are especially favoured.

It is especially preferred the combination of a borate cocatalyst, like Trityl tetrakis(pentafluorophenyl) borate, and methylaluminoxane (MAO).

Suitable amounts of cocatalyst will be well known to the skilled man.

The molar ratio of boron to the metal ion of the metallocene may be in the range of 0.5:1 to 10:1 mol/mol, preferably in the range of 1:1 to 10:1, especially in the range of 1:1 to 5:1 mol/mol.

The molar ratio of Al in the aluminoxane to the metal ion of the metallocene may be in the range of 1:1 to 2000:1 mol/mol, preferably in the range of 10:1 to 1000:1, and more preferably in the range of 50:1 to 500:1 mol/mol.

## Catalyst Manufacture

The metallocene catalyst complex can be used in combination with a suitable cocatalyst as a catalyst for the polymerization of propylene, e.g. in a solvent such as toluene or an aliphatic hydrocarbon, (i.e. for polymerization in solution), as it is well known in the art. Preferably, polymerization of propylene takes place in the condensed phase or in gas phase.

The catalyst of the invention can be used in supported or unsupported form. The particulate support material used is preferably an organic or inorganic material, such as silica, alumina or zirconia or a mixed oxide such as silica-alumina, in particular silica, alumina or silica-alumina. The use of a silica support is preferred. The skilled man is aware of the procedures required to support a metallocene catalyst.

Especially preferably, the support is a porous material so that the complex may be loaded into the pores of the support, e.g. using a process analogous to those described in WO 94/14856, WO 95/12622 and WO 2006/097497. The particle size is not critical but is preferably in the range of 5 to 200 pm, more preferably in the range of 20 to 80 pm. The use of these supports is routine in the art.

Alternatively, no support is used at all. Such a catalyst can be prepared in solution, for example in an aromatic solvent like toluene, by contacting the metallocene (as a solid or as a solution) with the cocatalyst, for example methylaluminoxane or a borane or a borate salt previously dissolved in an aromatic solvent, or can be prepared by sequentially adding the dissolved catalyst components to the polymerization medium.

Also, no external carrier may be used but the catalyst is still presented in solid particulate form. Thus, no external support material, such as inert organic or inorganic carrier, for example silica as described above is employed.

In order to provide the catalyst in solid form but without using an external carrier, it is preferred if a liquid/liquid emulsion system is used. Full disclosure of the necessary process can be found in WO 03/051934, which is herein incorporated by reference The most preferred catalyst system is defined in the example section below (single site catalyst system 1 (SSCS1)).

The polymerization conditions in the sequential polymerization of the propylene copolymer are nothing specific and well known to the skilled person. Typically the first propylene copolymer fraction (F1) is produced in a slurry reactor and the second propylene copolymer fraction (F2) is produced in a gas phase reactor in the presence of a the first propylene copolymer fraction (F1). Regarding such multistage processes a preferred process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479, WO 00/68315, WO2015/082379 or in WO2015/011134.

It is well known that prior to the main polymerization a prepolymerization may take place.

The prepolymerisation may be carried out in any type of continuously operating polymerization reactor. The prepolymerisation may be carried out in a slurry polymerization or a gas phase polymerization reactor, preferably in a loop prepolymerisation reactor.

In a preferred embodiment, the prepolymerisation is conducted as bulk slurry polymerization in liquid propylene, i.e. the liquid phase mainly comprises propylene, with minor amount of other reactants and optionally inert components dissolved therein.

The prepolymerisation is carried out in a continuously operating reactor at an average residence time of 5 minutes up to 90 min. Preferably the average residence time is within the range of 10 to 60 minutes and more preferably within the range of 15 to 45 minutes.

The prepolymerisation reaction is typically conducted at a temperature of 0 to 50 °C, preferably from 10 to 45 °C, and more preferably from 15 to 35 °C.

The pressure in the prepolymerisation reactor is not critical but must be sufficiently high to maintain the reaction mixture in liquid phase and is generally selected such that the pressure is higher than or equal to the pressure in the subsequent polymerization. Thus, the pressure may be from 20 to 100 bar, for example 30 to 70 bar.

In case a prepolymerisation step is performed, all of the catalyst mixture is introduced to the prepolymerisation step.

The precise control of the prepolymerisation conditions and reaction parameters is within the skill of the art.

As mentioned above the first propylene copolymer fraction (F1) is preferably produced in a slurry phase polymerization step, i.e. in the liquid phase.

The temperature in the slurry polymerization is typically from 50 to 110 °C, preferably from 60 to 100 °C and in particular from 65 to 95 °C. The pressure is from 1 to 150 bar, preferably from 10 to 100 bar.

The slurry polymerization may be conducted in any known reactor used for slurry polymerization. Such reactors include a continuous stirred tank reactor and a loop reactor. Loop reactors are generally known in the art and examples are given, for instance, in US-A-4582816, US-A-3405109, US-A-3324093, EP-A-479186 and US-A-5391654.

The residence time can vary in the reactor zones identified above. In one embodiment, the residence time in the slurry reactor, for example a loop reactor, is in the range of from 0.5 to 5 hours, for example 0.5 to 2 hours, while the residence time in the gas phase reactor generally will be in the range from 1 to 8 hours, like from 1.5 to 4 hours.

Into the slurry polymerization stage other components may also be introduced as it is known in the art. Thus, hydrogen is added to control the molecular weight of the polymer.

The slurry polymerization stage is followed by the gas phase polymerization stage in which the second propylene copolymer fraction (F2) is produced. It is preferred to conduct the slurry directly into the gas phase polymerization zone without a flash step between the stages. This kind of direct feed is described in EP-A-887379, EP-A-887380, EP-A-887381 and EP-A-991684.

That is, the reaction product of the slurry phase polymerization, i.e. the first propylene copolymer fraction (F1), which preferably is carried out in a loop reactor, is then transferred to the subsequent gas phase reactor in which the second propylene copolymer fraction (F2) is produced .

The polymerization in gas phase may be conducted in fluidized bed reactors, in fast fluidized bed reactors or in settled bed reactors or in any combination of these. When a combination of reactors is used then the polymer is transferred from one polymerization reactor to another. However it is preferred that the second propylene copolymer fraction (F2) is produced in one gas phase reactor.

Typically the gas phase reactor is operated at a temperature within the range of from 50 to 100 °C, preferably from 65 to 95 °C. The pressure is suitably from 10 to 40 bar, preferably from 15 to 30 bar

According to this invention the first propylene copolymer fraction (F1) is produced in the first step, i.e. in a first reactor, e.g. the loop reactor, whereas the second propylene copolymer fraction (F2) is produced in the subsequent step, i.e. in the second reactor, e.g. the gas phase reactor. In case the polymerization process of the first propylene copolymer fraction (F1) and the second propylene copolymer fraction (F2) contains also a prepolimerization step, then

the first propylene copolymer fraction (F1) according to this invention is the polymer produced in the prepolymerization together with the polymer produced in the subsequent first step, in the first reactor, e.g. the loop reactor, whereas the second propylene copolymer fraction (F2) is the product of the second reactor, e.g. the gas phase reactor. The amount of polymer produced in the prepolymerization step is comparatively small compared to the quantities produced in the first reactor and therefore has no great influence on the properties of the polypropylene from the first reactor.

The preferred properties of the first propylene copolymer fraction (F1) and the second propylene copolymer fraction (F2) have been mentioned above.

**The alpha-nucleating agent**

Another important component of the polypropylene composition is an alpha-nucleating agent which is present in the range of 0.01 to 1.0 wt.-%, more preferably in the range of 0.03 to 0.8 wt.-%, yet more preferably in the range of 0.05 to 0.5 wt.-%, based on the total weight of the composition.

Preferred examples of the alpha-nucleating agents are disclosed in "Plastics Additives Handbook", Hans Zweifel, 6th Edition, p. 967 - 990.

Among all alpha-nucleating agents, aluminium hydroxy-bis[2,4,8,10-tetrakis(1,1-dimethylethyl)-6-hydroxy-12H-dibenzo-[d,g]-dioxa-phoshocin-6-oxidato] based nucleating agents like ADK NA-21 , NA-21 E, NA-21 F, etc., sodium-2,2'-methylene-bis(4,6-di-t-butylphenyl)phosphate (ADK NA-11), aluminium-hydroxy-bis[2,2'-methylene-bis(4,6-di-t-butyl-phenyl)-phosphate], sorbitol-based nucleating agents, i.e. di(alkylbenzylidene)sorbitols like 1,3:2,4-25 dibenzylidene sorbitol, 1,3:2,4-di(4-methylbenzylidene) sorbitol, 1,3:2,4-di(4-ethylbenzylidene) sorbitol and 1,3:2,4-Bis(3,4-dimethylbenzylidene) sorbitol, as well as nonitol derivatives, like 1,2,3-trideoxy-4,6;5,7-bis-O-[(4-propylphenyl)methylene] nonitol, and benzene-trisamides like substituted 1,3,5-benzenetrisamides as N,N',N"-tris-tert-butyl-1,3,5-benzenetricarboxamide, N,N',N"-tris-cyclohexyl-1,3,5-benzene-tricarboxamide and N-[3,5-bis-(2,2-dimethyl-propionylamino)-phenyl]-2,2-dimethyl-propionamide, wherein 1,3:2,4-di(4-methylbenzylidene) sorbitol and N-[3,5-bis-(2,2-dimethyl-propionylamino)-phenyl]-2,2-dimethyl-propionamide and polymeric nucleating agents selected from the group consisting of vinylcycloalkane polymers and vinylalkane polymers are particularly preferred.

Preferably the polypropylene composition contains at least one alpha-nucleating agent selected from the group consisting of polymeric nucleating agent, sorbitol-based nucleating agent, nonitol-based nucleating agent and benzene-trisamide-based nucleating agent. Still more preferably the alpha-nucleating agent(s) is/are selected from the group consisting of 1,2,3-trideoxy-4,6;5,7-bis-O-[(4-propylphenyl)methylene] nonitol, bis-(3,4-dimethylbenzylidene)-sorbitol (DMDBS) and poly vinylcyclohexane (p-VCH). Yet more preferably the alpha-nucleating agent(s) present in the polypropylene composition is/are selected from the group consisting of 1,2,3-trideoxy-4,6;5,7-bis-O-[(4-propylphenyl)methylene] nonitol, bis-(3,4-dimethylbenzylidene)-sorbitol (DMDBS) and poly vinylcyclohexane (p-VCH).

Thus, it is especially preferred that the alpha-nucleating agent(s) present in the polypropylene composition is/are selected from the group consisting of poly vinylcyclohexane (p-VCH), 1,2,3-trideoxy-4,6;5,7-bis-O-[(4-propylphenyl)methylene] nonitol and bis-(3,4-dimethylbenzylidene)-sorbitol (DMDBS), wherein further the total amount of the alpha-nucleating agent(s), based on the total amount of the polypropylene composition, is in the range of 0.05 to 0.5 wt.-%.

**Further components**

As stated above the polypropylene composition must comprise the propylene copolymer as main component and an alpha-nucleating agent. Additionally the polypropylene composition may comprise typical additives other than the alpha-nucleating agent, like antioxidants, antistatic agents and antifogging agents, and other polypropylene(s) being different to the propylene copolymer.

Typically the total amount of additives, excluding the alpha-nucleating agent, based on the polypropylene composition, shall not exceed 1.0 wt.-%, preferably is in the range of 0.05 to 1.0 wt.-%.

The alpha-nucleating agent and the additives may be added to the polypropylene composition together with low amounts of polyolefins being different to the propylene copolymer. The term "different to" in this context means that the polyolefin differs from the propylene copolymer in at least one typical characterizing feature in the field of polymers, like molecular weight, for instance in terms of melt flow rate $MFR_2$ (230 °C; 2.16 kg), melting point and/or misinsertions, for instance in 2,1 erythro regio-defects, as well as the absence of comonomers as required for the propylene copolymer. Accordingly the polyolefins used for this purpose are preferably propylene homopolymers and not propylene copolymers. Accordingly, such polypropylene, more preferably such propylene homopolymer, has a melt flow rate $MFR_2$ (230 °C; 2.16 kg), measured according to ISO 1133, in the range of 1.0 to 25.0 g/10min. Even more preferably, such polypropylene, still more preferably such propylene homopolymer, has been produced with a Ziegler-Natta catalyst of the $4^{th}$ or $5^{th}$ generation (cf. pages17/18 of "Polypropylene Handbook" 2nd Edition of Nello Pasquini) and thus has a highest melting peak temperature $T_{p,m}$ measured by DSC (scan rate of 10 °C/min; second heating step) in the range of 162 to 169 °C. A typical additional feature of such a polypropylene, more preferably of such a propylene homopolymer, produced with

a Ziegler-Natta catalyst of the 4th or 5th generation is that it does not show 2,1 erythro regio-defects, i.e. has no detectable 2,1 erythro regio-defects when analyzed according to this invention. Accordingly it is preferred that the polypropylene composition comprise one or more propylene homopolymer(s), wherein said one or more propylene homopolymer(s), has/have preferably a melt flow rate $MFR_2$ (230 °C; 2.16 kg), measured according to ISO 1133, in the range of 1.0 to 25.0 g/10min. More preferably, the one or more propylene homopolymer(s) has/have a melt flow rate $MFR_2$ (230 °C; 2.16 kg), measured according to ISO 1133, in the range of 1.0 to 25.0 g/10min and a highest melting peak temperature $T_{p,m}$ measured by DSC (scan rate of 10 °C/min; second heating step) in the range of 162 to 169 °C. Even more preferred the one or more propylene homopolymer(s) has/have a melt flow rate $MFR_2$ (230 °C; 2.16 kg), measured according to ISO 1133, in the range of 1.0 to 25.0 g/10min, a highest melting peak temperature $T_{p,m}$ measured by DSC (scan rate of 10 °C/min; second heating step) in the range of 162 to 169 °C and no detectable 2,1 erythro regio-defects measured by $^{13}C$ NMR. The total amount of polyolefins as defined in this paragraph, based on the amount of the polypropylene composition, is in the range of 0.5 to 4.0 wt.-%. Accordingly it is especially preferred that the polyolefins are one or more propylene homopolymer(s), wherein further total amount of said one or more propylene homopolymer(s), based on the amount of the polypropylene composition, is in the range of 0.5 to 4.0 wt.-%.

Accordingly the polypropylene composition according to this invention comprises, preferably consists of,

(a) at least 95.0 wt.-%, more preferably at least 97.0 wt.-%, based on the total weight of the composition, of a propylene copolymer, said propylene copolymer has a comonomer selected from the group consisting of 1-butene, 1-hexene and 1-octene, preferably said propylene copolymer is a propylene 1-butene copolymer,

(b) 0.01 to 1.0 wt.-%, more preferably 0.05 to 0.5 wt.-%, based on the total weight of the composition, of an alpha-nucleating agent,

(c) 0.05 to 1.0 wt.-%, based on the total weight of the composition, of additives being not an alpha-nucleating agent, and

(d) optionally 0.5 to 4.0 wt.-%, based on the total weight of the composition, of one or more propylene homopolymer(s), preferably wherein said one or more propylene homopolymer(s) has/have a melt flow rate $MFR_2$ (230 °C; 2.16 kg), measured according to ISO 1133, in the range of 1.0 to 25.0 g/10min, more preferably wherein said one or more propylene homopolymer(s) has/have a melt flow rate $MFR_2$ (230 °C; 2.16 kg), measured according to ISO 1133, in the range of 1.0 to 25.0 g/10min and a highest melting peak temperature $T_{p,m}$ measured by DSC (scan rate of 10 °C/min; second heating step) in the range of 162 to 169 °C, still more preferably wherein said one or more propylene homopolymer(s) has/have a melt flow rate $MFR_2$ (230 °C; 2.16 kg), measured according to ISO 1133, in the range of 1.0 to 25.0 g/10min, a highest melting peak temperature $T_{p,m}$ measured by DSC (scan rate of 10 °C/min; second heating step) in the range of 162 to 169 °C and no detectable 2,1 erythro regio-defects measured by $^{13}C$ NMR.

**Properties of the polypropylene composition**

As mentioned above the main component of the polypropylene composition is the propylene copolymer. Accordingly the specific features of the propylene copolymer can be also identified on the final polypropylene composition. Or in other words important features of the polypropylene composition are identical or at least very similar to the propylene copolymer. The following properties can be in particular mentioned: the amount of comonomer, the type of comonomer, the 2,1 erythro regio-defects, molecular weight distribution and the melt flow rate.

Accordingly the polypropylene composition has a comonomer content in the range of 2.0 to 6.5 mol-%, preferably in the range of 3.0 to 5.5 mol-%, measured by $^{13}C$-NMR. The comonomer of the polypropylene composition is selected from the group consisting of 1-butene, 1-hexene and 1-octene, preferably the comonomer is 1-butene. For the avoidance of doubt, the main monomer of the polypropylene composition is propylene, whereas the comonomer can be only selected from the group consisting of 1-butene, 1-hexene and 1-octene, preferably the comonomer is 1-butene. Thus in a very preferred embodiment the sole comonomer of the polypropylene composition is 1-butene in an amount of 2.0 to 6.5 mol-%, preferably in the range of 3.0 to 5.5 mol-%, measured by $^{13}C$-NMR.

Further the polypropylene composition has 2,1 erythro regio-defects in the range of >0.35 to 0.85 mol-%, measured by $^{13}C$ NMR, more preferably in the range of 3.0 to 5.5 mol-% and a melt flow rate $MFR_2$ (230 °C; 2.16 kg), measured according to ISO 1133, in the range of 15 to 100 g/10min, more preferably in the range of 15 to 80 g/10min.

A further advantage of the propylene copolymer of this invention is its rather low xylene cold soluble content. Accordingly the polypropylene composition has a xylene cold soluble (XCS) fraction, determined at 25 °C according to ISO 16152, in the range of 0.1 to 1.0 wt.-%, more preferably in the range of 0.2 to 0.6 wt.-%. A low soluble content is also an indicator that the polypropylene composition is not a heterophasic system but is monophasic, like the propylene copolymer being the main polymer component in the polypropylene composition.

Further it is preferred that the polypropylene composition has a molecular weight distribution (MWD) determined by Gel Permeation Chromatography (GPC) in the range of 2.0 to 5.0, more preferably in the range of 2.1 to 4.5, still more preferably in the range of 2.2 to 3.5.

The polypropylene composition according to this invention can be defined further by its melting and crystallization behavior. The polypropylene composition according to this invention is characterized in particular by a relatively small gap between melting and crystallization temperature. For defining the melting and crystallization temperature always the highest melting peak temperature $T_{p,m}$ measured by DSC (scan rate of 10 °C/min; second heating step) and the highest crystallization peak temperature $T_{p,c}$ measured by DSC (scan rate of 10 °C/min; cooling step) is used. Thereby it is especially preferred that the polypropylene composition has a highest melting peak temperature $T_{p,m}$ which is rather high for metallocene produced propylene copolymers.

Accordingly, it is preferred that the polypropylene composition according to this invention

(a) has the highest melting peak temperature $T_{p,m}$ measured by DSC (scan rate of 10 °C/min; second heating step) in the range of 140 to 152 °C, and
(b) complies with the equation 1, preferably equation 1a,

$$24\,°C < Tp{,}m - Tp{,}c < 32\,°C \quad (1)$$

$$25\,°C < Tp{,}m - Tp{,}c < 30\,°C \quad (1a)$$

wherein

"$T_{p,m}$" is the highest melting peak temperature $T_{p,m}$ [°C] measured by DSC (scan rate of 10 °C/min; second heating step) and
"$T_{p,c}$" is the highest crystallization peak temperature $T_{p,c}$ [°C] measured by DSC (scan rate of 10 °C/min; cooling step).

More preferably the polypropylene composition according to this invention has

(a) the highest melting peak temperature $T_{p,m}$ measured by DSC (scan rate of 10 °C/min; second heating step) in the range of 140 to 152 °C, and
(b) the highest crystallization peak temperature $T_{p,c}$ measured by DSC (scan rate of 10 °C/min; cooling step) in the range of 115 to 125 °C,

wherein further the polypropylene composition complies with the equation 1, preferably equation 1a,

$$24\,°C < Tp{,}m - Tp{,}c < 32\,°C \quad (1)$$

$$25\,°C < Tp{,}m - Tp{,}c < 30\,°C \quad (1a)$$

wherein

"$T_{p,m}$" is the highest melting peak temperature $T_{p,m}$ [°C] measured by DSC (scan rate of 10 °C/min; second heating step) and
"$T_{p,c}$" is the highest crystallization peak temperature $T_{p,c}$ [°C] measured by DSC (scan rate of 10 °C/min; cooling step).

**Preferred embodiments**

In the following some especially preferred embodiments of the invention are listed.

A living hinge, preferably an injection molded living hinge, or

an Injection molded article, preferably a thin wall injection molded article, wherein the thin wall injection molded article has a wall thickness up to 2.00 mm, comprising two rigid pieces which are connected by at least one living hinge, wherein
the injection molded article is made as a single piece,
wherein further the living hinge and the injection molded article consists of a polypropylene composition
said polypropylene composition comprises

(a) at least 95.0 wt.-%, more preferably at least 97.0 wt.-%, based on the total weight of the composition, of a propylene copolymer, said propylene copolymer has a comonomer selected from the group consisting of 1-butene, 1-hexene and 1-octene, preferably said propylene copolymer is a propylene 1-butene copolymer,
(b) 0.01 to 1.0 wt.-%, more preferably 0.05 to 0.5 wt.-%, based on the total weight of the composition, of an alpha-nucleating agent, preferably the alpha-nucleating agent is selected from the group consisting of polymeric nucleating agent, sorbitol-based nucleating agent, nonitol-based nucleating agent and/or benzene-trisamide-based nucleating agent,

wherein further the composition has

(i) a comonomer content, measured by $^{13}C$-NMR, in the range of 2.0 to 6.5 mol-%, preferably in the range of 3.0 to 5.5 mol-%, the comonomer is selected from the group consisting of 1-butene, 1-hexene and 1-octene, preferably the comonomer is 1-butene,
(ii) 2,1 erythro regio-defects, measured by $^{13}C$ NMR, in the range of >0.35 to 0.85 mol-%, preferably in the range of 0.4 to 0.75 mol-%, and
(iii) a melt flow rate $MFR_2$ (230 °C; 2.16 kg), measured according to ISO 1133, in the range of 15 to 100 g/10min, preferably in the range of 16 to 90 g/10min, more preferably in the range of 17 to 80 g/10 min.

Still more preferably the invention is directed to a living hinge, preferably an injection molded living hinge, or

an Injection molded article, preferably a thin wall injection molded article, wherein the thin wall injection molded article has a wall thickness up to 2.00 mm, comprising two rigid pieces which are connected by at least one living hinge, wherein
the injection molded article is made as a single piece,
wherein further the living hinge and the injection molded article consists of a polypropylene composition
said polypropylene composition comprises

(a) at least 95.0 wt.-%, more preferably at least 97.0 wt.-%, based on the total weight of the composition, of a propylene copolymer, said propylene copolymer has a comonomer selected from the group consisting of 1-butene, 1-hexene and 1-octene, preferably said propylene copolymer is a propylene 1-butene copolymer,
(b) 0.01 to 1.0 wt.-%, more preferably 0.05 to 0.5 wt.-%, based on the total weight of the composition, of an alpha-nucleating agent, preferably the alpha-nucleating agent is selected from the group consisting of polymeric nucleating agent, sorbitol-based nucleating agent, nonitol-based nucleating agent and/or benzene-trisamide-based nucleating agent,

wherein further the propylene copolymer has

(i) a comonomer content, measured by $^{13}C$-NMR, in the range of 2.0 to 6.5 mol-%, preferably in the range of 3.0 to 5.5 mol-%, the comonomer is selected from the group consisting of 1-butene, 1-hexene and 1-octene, preferably the comonomer is 1-butene, and
(ii) 2,1 erythro regio-defects in the range of >0.35 to 0.85 mol-%, preferably in the range of 0.4 to 0.75 mol-%. measured by $^{13}C$ NMR,
wherein still further the composition has
(iii) a comonomer content, measured by $^{13}C$-NMR, is in the range of 2.0 to 6.5 mol-%, preferably in the range of 3.0 to 5.5 mol-%, the comonomer is selected from the group consisting of 1-butene, 1-hexene and 1-octene, preferably the comonomer is 1-butene,
(iv) 2,1 erythro regio-defects in the range of >0.35 to 0.85 mol-%, preferably in the range of 0.4 to 0.75 mol-%. measured by $^{13}C$ NMR, and
(v) a melt flow rate $MFR_2$ (230 °C; 2.16 kg), measured according to ISO 1133, in the range of 15 to 100 g/10min, preferably in the range of 16 to 90 g/10min, more preferably in the range of 17 to 80 g/10 min.

Still yet more preferably the invention is directed to a living hinge, preferably an injection molded living hinge, or

an Injection molded article, preferably a thin wall injection molded article, wherein the thin wall injection molded article has a wall thickness up to 2.00 mm, comprising two rigid pieces which are connected by at least one living hinge, wherein
the injection molded article is made as a single piece,
wherein further the living hinge and the injection molded article consists of a polypropylene composition

said polypropylene composition consists of,

(a) at least 95.0 wt.-%, more preferably at least 97.0 wt.-%, based on the total weight of the composition, of a propylene copolymer, said propylene copolymer has a comonomer selected from the group consisting of 1-butene, 1-hexene and 1-octene, preferably said propylene copolymer is a propylene 1-butene copolymer,
(b) 0.01 to 1.0 wt.-%, more preferably 0.05 to 0.5 wt.-%, based on the total weight of the composition, of an alpha-nucleating agent, preferably the alpha-nucleating agent is selected from the group consisting of polymeric nucleating agent, sorbitol-based nucleating agent, nonitol-based nucleating agent and/or benzene-trisamide-based nucleating agent,
(c) 0.05 to 1.0 wt.-%, based on the total weight of the composition, of additives being not an alpha-nucleating agent, and
(d) optionally 0.5 to 4.0 wt.-%, based on the total weight of the composition, of one or more propylene homopolymer(s), preferably wherein said one or more propylene homopolymer(s) has/have a melt flow rate $MFR_2$ (230 °C; 2.16 kg), measured according to ISO 1133, in the range of 1.0 to 25.0 g/10min, more preferably wherein said one or more propylene homopolymer(s) has/have a melt flow rate $MFR_2$ (230 °C; 2.16 kg), measured according to ISO 1133, in the range of 1.0 to 25.0 g/10min and a highest melting peak temperature $T_{p,m}$ measured by DSC (scan rate of 10 °C/min; second heating step) in the range of 162 to 169 °C, still more preferably wherein said one or more propylene homopolymer(s) has/have a melt flow rate $MFR_2$ (230 °C; 2.16 kg), measured according to ISO 1133, in the range of 1.0 to 25.0 g/10min, a highest melting peak temperature $T_{p,m}$ measured by DSC (scan rate of 10 °C/min; second heating step) in the range of 162 to 169 °C and no detectable 2,1 erythro regio-defects measured by $^{13}C$ NMR,

wherein further the composition has

(i) a comonomer content, measured by $^{13}C$-NMR, in the range of 2.0 to 6.5 mol-%, preferably in the range of 3.0 to 5.5 mol-%, the comonomer is selected from the group consisting of 1-butene, 1-hexene and 1-octene, preferably the comonomer is 1-butene,
(ii) 2,1 erythro regio-defects, measured by $^{13}C$ NMR, in the range of >0.35 to 0.85 mol-%, preferably in the range of 0.4 to 0.75 mol-%, and
(iii) a melt flow rate $MFR_2$ (230 °C; 2.16 kg), measured according to ISO 1133, in the range of 15 to 100 g/10min, preferably in the range of 16 to 90 g/10min, more preferably in the range of 17 to 80 g/10 min.

In another preferred embodiment the invention is directed to a living hinge, preferably an injection molded living hinge, or

an Injection molded article, preferably a thin wall injection molded article, wherein the thin wall injection molded article has a wall thickness up to 2.00 mm, comprising two rigid pieces which are connected by at least one living hinge, wherein
the injection molded article is made as a single piece,
wherein further the living hinge and the injection molded article consists of a polypropylene composition
said polypropylene composition consists of,

(a) at least 95.0 wt.-%, more preferably at least 97.0 wt.-%, based on the total weight of the composition, of a propylene copolymer, said propylene copolymer has a comonomer selected from the group consisting of 1-butene, 1-hexene and 1-octene, preferably said propylene copolymer is a propylene 1-butene copolymer,
(b) 0.01 to 1.0 wt.-%, more preferably 0.05 to 0.5 wt.-%, based on the total weight of the composition, of an alpha-nucleating agent,
(c) 0.05 to 1.0 wt.-%, based on the total weight of the composition, of additives being not an alpha-nucleating agent, and
(d) optionally 0.5 to 4.0 wt.-%, based on the total weight of the composition, of one or more propylene homopolymer(s), preferably wherein said one or more propylene homopolymer(s) has/have a melt flow rate $MFR_2$ (230 °C; 2.16 kg), measured according to ISO 1133, in the range of 1.0 to 25.0 g/10min, more preferably wherein said one or more propylene homopolymer(s) has/have a melt flow rate $MFR_2$ (230 °C; 2.16 kg), measured according to ISO 1133, in the range of 1.0 to 25.0 g/1 0min and a highest melting peak temperature $T_{p,m}$ measured by DSC (scan rate of 10 °C/min; second heating step) in the range of 162 to 169 °C, still more preferably wherein said one or more propylene homopolymer(s) has/have a melt flow rate $MFR_2$ (230 °C; 2.16 kg), measured according to ISO 1133, in the range of 1.0 to 25.0 g/10min, a highest melting peak temperature $T_{p,m}$ measured by DSC (scan rate of 10 °C/min; second heating step) in the range of 162 to 169 °C and no

detectable 2,1 erythro regio-defects measured by $^{13}$C NMR,

wherein further the propylene copolymer has

(i) a comonomer content, measured by $^{13}$C-NMR, in the range of 2.0 to 6.5 mol-%, preferably in the range of 3.0 to 5.5 mol-%, the comonomer is selected from the group consisting of 1-butene, 1-hexene and 1-octene, preferably the comonomer is 1-butene, and
(ii) 2,1 erythro regio-defects in the range of >0.35 to 0.85 mol-%, preferably in the range of 0.4 to 0.75 mol-%. measured by $^{13}$C NMR,
wherein still further the composition has
(iii) a comonomer content, measured by $^{13}$C-NMR, is in the range of 2.0 to 6.5 mol-%, preferably in the range of 3.0 to 5.5 mol-%, the comonomer is selected from the group consisting of 1-butene, 1-hexene and 1-octene, preferably the comonomer is 1-butene,
(iv) 2,1 erythro regio-defects in the range of >0.35 to 0.85 mol-%, preferably in the range of 0.4 to 0.75 mol-%. measured by $^{13}$C NMR, and
(v) a melt flow rate $MFR_2$ (230 °C; 2.16 kg), measured according to ISO 1133, in the range of 15 to 100 g/10min, preferably in the range of 16 to 90 g/10min, more preferably in the range of 17 to 80 g/10 min.

In still another preferred embodiment the invention the invention is directed to a living hinge, preferably an injection molded living hinge, or

an Injection molded article, preferably a thin wall injection molded article, wherein the thin wall injection molded article has a wall thickness up to 2.00 mm, comprising two rigid pieces which are connected by at least one living hinge, wherein
the injection molded article is made as a single piece,
wherein further the living hinge and the injection molded article consists of a polypropylene composition
said polypropylene composition consists of,

(a) at least 95.0 wt.-%, more preferably at least 97.0 wt.-%, based on the total weight of the composition, of a propylene copolymer, said propylene copolymer has a comonomer selected from the group consisting of 1-butene, 1-hexene and 1-octene, preferably said propylene copolymer is a propylene 1-butene copolymer,
(b) 0.01 to 1.0 wt.-%, more preferably 0.05 to 0.5 wt.-%, based on the total weight of the composition, of an alpha-nucleating agent, preferably the alpha-nucleating agent is selected from the group consisting of polymeric nucleating agent, sorbitol-based nucleating agent, nonitol-based nucleating agent and/or benzene-trisamide-based nucleating agent,
(c) 0.05 to 1.0 wt.-%, based on the total weight of the composition, of additives being not an alpha-nucleating agent, and
(d) optionally 0.5 to 4.0 wt.-%, based on the total weight of the composition, of one or more propylene homopolymer(s), preferably wherein said one or more propylene homopolymer(s) has/have a melt flow rate $MFR_2$ (230 °C; 2.16 kg), measured according to ISO 1133, in the range of 1.0 to 25.0 g/10min, more preferably wherein said one or more propylene homopolymer(s) has/have a melt flow rate $MFR_2$ (230 °C; 2.16 kg), measured according to ISO 1133, in the range of 1.0 to 25.0 g/1 0min and a highest melting peak temperature $T_{p,m}$ measured by DSC (scan rate of 10 °C/min; second heating step) in the range of 162 to 169 °C, still more preferably wherein said one or more propylene homopolymer(s) has/have a melt flow rate $MFR_2$ (230 °C; 2.16 kg), measured according to ISO 1133, in the range of 1.0 to 25.0 g/10min, a highest melting peak temperature $T_{p,m}$ measured by DSC (scan rate of 10 °C/min; second heating step) in the range of 162 to 169 °C and no detectable 2,1 erythro regio-defects measured by $^{13}$C NMR,

wherein further the composition has

(i) a comonomer content, measured by $^{13}$C-NMR, in the range of 2.0 to 6.5 mol-%, preferably in the range of 3.0 to 5.5 mol-%, the comonomer is selected from the group consisting of 1-butene, 1-hexene and 1-octene, preferably the comonomer is 1-butene,
(ii) 2,1 erythro regio-defects, measured by $^{13}$C NMR, in the range of >0.35 to 0.85 mol-%, preferably in the range of 0.4 to 0.75 mol-%, and
(iii) a melt flow rate $MFR_2$ (230 °C; 2.16 kg), measured according to ISO 1133, in the range of 15 to 100 g/10min, preferably in the range of 16 to 90 g/10min, more preferably in the range of 17 to 80 g/10 min.
(iv) the highest melting peak temperature $T_{p,m}$ measured by DSC (scan rate of 10 °C/min; second heating step)

in the range of 140 to 152 °C, and
wherein still further the composition
(v) complies with the equation 1, preferably equation 1a,

$$24\,°C < Tp,m - Tp,c < 32\,°C \quad (1)$$

$$25\,°C < Tp,m - Tp,c < 30\,°C \quad (1a)$$

wherein

"$T_{p,m}$" is the highest melting peak temperature $T_{p,m}$ [°C] measured by DSC (scan rate of 10 °C/min; second heating step) and
"$T_{p,c}$" is the highest crystallization peak temperature $T_{p,c}$ [°C] measured by DSC (scan rate of 10 °C/min; cooling step).

In still yet another preferred embodiment the invention the invention is directed to a living hinge, preferably an injection molded living hinge, or

an Injection molded article, preferably a thin wall injection molded article, wherein the thin wall injection molded article has a wall thickness up to 2.00 mm, comprising two rigid pieces which are connected by at least one living hinge, wherein
the injection molded article is made as a single piece,
wherein further the living hinge and the injection molded article consists of a polypropylene composition
said polypropylene composition consists of,

(a) at least 95.0 wt.-%, more preferably at least 97.0 wt.-%, based on the total weight of the composition, of a propylene copolymer, said propylene copolymer has a comonomer selected from the group consisting of 1-butene, 1-hexene and 1-octene, preferably said propylene copolymer is a propylene 1-butene copolymer,
(b) 0.01 to 1.0 wt.-%, more preferably 0.05 to 0.5 wt.-%, based on the total weight of the composition, of an alpha-nucleating agent, preferably the alpha-nucleating agent is selected from the group consisting of polymeric nucleating agent, sorbitol-based nucleating agent, nonitol-based nucleating agent and/or benzene-trisamide-based nucleating agent,
(c) 0.05 to 1.0 wt.-%, based on the total weight of the composition, of additives being not an alpha-nucleating agent, and
(d) optionally 0.5 to 4.0 wt.-%, based on the total weight of the composition, of one or more propylene homopolymer(s), preferably wherein said one or more propylene homopolymer(s) has/have a melt flow rate $MFR_2$ (230 °C; 2.16 kg), measured according to ISO 1133, in the range of 1.0 to 25.0 g/10min, more preferably wherein said one or more propylene homopolymer(s) has/have a melt flow rate $MFR_2$ (230 °C; 2.16 kg), measured according to ISO 1133, in the range of 1.0 to 25.0 g/10min and a highest melting peak temperature $T_{p,m}$ measured by DSC (scan rate of 10 °C/min; second heating step) in the range of 162 to 169 °C, still more preferably wherein said one or more propylene homopolymer(s) has/have a melt flow rate $MFR_2$ (230 °C; 2.16 kg), measured according to ISO 1133, in the range of 1.0 to 25.0 g/10min, a highest melting peak temperature $T_{p,m}$ measured by DSC (scan rate of 10 °C/min; second heating step) in the range of 162 to 169 °C and no detectable 2,1 erythro regio-defects measured by $^{13}C$ NMR,

wherein further the propylene copolymer has

(i) a comonomer content, measured by $^{13}C$-NMR, in the range of 2.0 to 6.5 mol-%, preferably in the range of 3.0 to 5.5 mol-%, the comonomer is selected from the group consisting of 1-butene, 1-hexene and 1-octene, preferably the comonomer is 1-butene, and
(ii) 2,1 erythro regio-defects in the range of >0.35 to 0.85 mol-%, preferably in the range of 0.4 to 0.75 mol-%. measured by $^{13}C$ NMR,
wherein still further the composition has
(iii) a comonomer content, measured by $^{13}C$-NMR, in the range of 2.0 to 6.5 mol-%, preferably in the range of 3.0 to 5.5 mol-%,
(iv) 2,1 erythro regio-defects, measured by $^{13}C$ NMR, in the range of >0.35 to 0.85 mol-%, preferably in the

range of 0.4 to 0.75 mol-%, and
(v) a melt flow rate $MFR_2$ (230 °C; 2.16 kg), measured according to ISO 1133, in the range of 15 to 100 g/10min, preferably in the range of 16 to 90 g/10min, more preferably in the range of 17 to 80 g/10 min.
(vi) the highest melting peak temperature $T_{p,m}$ measured by DSC (scan rate of 10 °C/min; second heating step) in the range of 140 to 152 °C, and
wherein still further the composition
(vii) complies with the equation 1, preferably equation 1a,

$$24\,°C < Tp,m - Tp,c < 32\,°C \qquad (1)$$

$$25\,°C < Tp,m - Tp,c < 30\,°C \qquad (1a)$$

wherein

"$T_{p,m}$" is the highest melting peak temperature $T_{p,m}$ [°C] measured by DSC (scan rate of 10 °C/min; second heating step) and
"$T_{p,c}$" is the highest crystallization peak temperature $T_{p,c}$ [°C] measured by DSC (scan rate of 10 °C/min; cooling step).

The invention is also directed to a living hinge, preferably an injection molded living hinge, or an Injection molded article, preferably a thin wall injection molded article, wherein the thin wall injection molded article has a wall thickness up to 2.00 mm, comprising two rigid pieces which are connected by at least one living hinge, wherein

the injection molded article is made as a single piece,
wherein further the living hinge and the injection molded article consists of a polypropylene composition
said polypropylene composition consists of,

(a) at least 95.0 wt.-%, more preferably at least 97.0 wt.-%, based on the total weight of the composition, of a propylene copolymer, said propylene copolymer has a comonomer selected from the group consisting of 1-butene, 1-hexene and 1-octene, preferably said propylene copolymer is a propylene 1-butene copolymer,
(b) 0.01 to 1.0 wt.-%, more preferably 0.05 to 0.5 wt.-%, based on the total weight of the composition, of an alpha-nucleating agent, preferably the alpha-nucleating agent is selected from the group consisting of polymeric nucleating agent, sorbitol-based nucleating agent, nonitol-based nucleating agent and/or benzene-trisamide-based nucleating agent,
(c) 0.05 to 1.0 wt.-%, based on the total weight of the composition, of additives being not an alpha-nucleating agent, and
(d) optionally 0.5 to 4.0 wt.-%, based on the total weight of the composition, of one or more propylene homopolymer(s), preferably wherein said one or more propylene homopolymer(s) has/have a melt flow rate $MFR_2$ (230 °C; 2.16 kg), measured according to ISO 1133, in the range of 1.0 to 25.0 g/10min, more preferably wherein said one or more propylene homopolymer(s) has/have a melt flow rate $MFR_2$ (230 °C; 2.16 kg), measured according to ISO 1133, in the range of 1.0 to 25.0 g/10min and a highest melting peak temperature $T_{p,m}$ measured by DSC (scan rate of 10 °C/min; second heating step) in the range of 162 to 169 °C, still more preferably wherein said one or more propylene homopolymer(s) has/have a melt flow rate $MFR_2$ (230 °C; 2.16 kg), measured according to ISO 1133, in the range of 1.0 to 25.0 g/10min, a highest melting peak temperature $T_{p,m}$ measured by DSC (scan rate of 10 °C/min; second heating step) in the range of 162 to 169 °C and no detectable 2,1 erythro regio-defects measured by $^{13}C$ NMR,

wherein further the propylene copolymer has

(i) a comonomer content, measured by $^{13}C$-NMR, in the range of 2.0 to 6.5 mol-%, preferably in the range of 3.0 to 5.5 mol-%, and
(ii) 2,1 erythro regio-defects in the range of >0.35 to 0.85 mol-%, preferably in the range of 0.4 to 0.75 mol-%. measured by $^{13}C$ NMR,
wherein still further the composition has
(iii) a comonomer content, measured by $^{13}C$-NMR, in the range of 2.0 to 6.5 mol-%, preferably in the range of 3.0 to 5.5 mol-%, the comonomer is selected from the group consisting of 1-butene, 1-hexene and 1-octene,

preferably the comonomer is 1-butene,
(iv) 2,1 erythro regio-defects, measured by $^{13}C$ NMR, in the range of >0.35 to 0.85 mol-%, preferably in the range of 0.4 to 0.75 mol-%, and
(v) a melt flow rate $MFR_2$ (230 °C; 2.16 kg), measured according to ISO 1133, in the range of 15 to 100 g/10min, preferably in the range of 16 to 90 g/10min, more preferably in the range of 17 to 80 g/10 min,
(vi) a xylene cold soluble (XCS) fraction, determined at 25 °C according to ISO 16152, in the range of 0.1 to 1.0 wt.-%, preferably in the range of 0.2 to 0.6 wt.-%,
(vii) a molecular weight distribution (MWD) determined by Gel Permeation Chromatography (GPC) in the range of 2.0 to 5.0, more preferably in the range of 2.1 to 4.5, still more preferably in the range of 2.2 to 3.5,
(viii) the highest melting peak temperature $T_{p,m}$ measured by DSC (scan rate of 10 °C/min; second heating step) in the range of 140 to 152 °C, and
wherein still further the composition
(ix) complies with the equation 1, preferably equation 1a,

$$24\,°C < Tp,m - Tp,c < 32\,°C \quad (1)$$

$$25\,°C < Tp,m - Tp,c < 30\,°C \quad (1a)$$

wherein

"$T_{p,m}$" is the highest melting peak temperature $T_{p,m}$ [°C] measured by DSC (scan rate of 10 °C/min; second heating step) and
"$T_{p,c}$" is the highest crystallization peak temperature $T_{p,c}$ [°C] measured by DSC (scan rate of 10 °C/min; cooling step).

In the following the invention is described by way of examples.

## A. Measuring methods

The following definitions of terms and determination methods apply for the above general description of the invention including the claims as well as to the below examples unless otherwise defined.

### Quantification of microstructure by NMR spectroscopy

Quantitative nuclear-magnetic resonance (NMR) spectroscopy was used to quantify the comonomer content of the polymers. Quantitative $^{13}C\{^1H\}$ NMR spectra recorded in the molten-state using a Bruker Avance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probe head at 180 °C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification. Standard single-pulse excitation was employed utilising the NOE at short recycle delays and the RS-HEPT decoupling scheme. A total of 1024 (1k) transients were acquired per spectra using a 3 s recycle delay.
Quantitative $^{13}C\{^1H\}$ NMR spectra were processed, integrated and relevant quantitative properties determined from the integrals. All chemical shifts are internally referenced to the methyl isotactic pentad (mmmm) at 21.85 ppm.
Basic comonomer content method spectral analysis method:
Characteristic signals corresponding to the incorporation of 1-butene were observed and the comonomer content quantified in the following way.
The amount of 1-butene incorporated in PPBPP isolated sequences was quantified using the integral of the $\alpha_{B2}$ sites at 43.6 ppm accounting for the number of reporting sites per comonomer:

$$B = I_\alpha / 2$$

The amount of 1-butene incorporated in PPBBPP double consecutively sequences was quantified using the integral of the $\alpha\alpha_{B2B2}$ site at 40.5 ppm accounting for the number of reporting sites per comonomer:

$$BB = 2 * I_{\alpha\alpha}$$

When double consecutive incorporation was observed the amount of 1-butene incorporated in PPBPP isolated sequences needed to be compensated due to the overlap of the signals $\alpha_{B2}$ and $\alpha_{B2B2}$ at 43.9 ppm:

$$B = (I_{\alpha} - 2 * I_{\alpha\alpha}) / 2$$

The total 1-butene content was calculated based on the sum of isolated and consecutively incorporated 1-butene:

$$B_{total} = B + BB$$

The amount of propene was quantified based on the main $S\alpha\alpha$ methylene sites at 46.7 ppm and compensating for the relative amount of $\alpha$B2 and $\alpha$B2B2 methylene unit of propene not accounted for (note B and BB count number of butene monomers per sequence not the number of sequences):

$$P_{total} = I_{S\alpha\alpha} + B + BB / 2$$

The total mole fraction of 1-butene in the polymer was then calculated as:

$$f_B = B_{total} / ( B_{total} + P_{total})$$

The full integral equation for the mole fraction of 1-butene in the polymer was:

$$f_B = (((I_{\alpha} - 2 * I_{\alpha\alpha}) / 2) + (2 * I_{\alpha\alpha})) / (I_{S\alpha\alpha} + ((I_{\alpha} - 2 * I_{\alpha\alpha}) / 2) + ((2 * I_{\alpha\alpha}) / 2)) + ((I_{a} - 2 * I_{\alpha\alpha}) / 2) + (2 * I\alpha\alpha))$$

This simplifies to:

$$f_B = (I_{\alpha} / 2 + I_{\alpha\alpha}) / (I_{S\alpha\alpha} + I_{\alpha} + I_{\alpha\alpha})$$

The total incorporation of 1-butene in mole percent was calculated from the mole fraction in the usual manner:

$$B\ [mol\text{-}\%] = 100 * f_B$$

The total incorporation of 1-butene in weight percent was calculated from the mole fraction in the standard manner:

$$B\ [wt.\text{-}\%] = 100 * (f_B * 56.11) / ((f_B * 56.11) + ((1 - f_B) * 42.08))$$

Details of these procedures can be found in Katja Klimke, Matthew Parkinson, Christian Piel, Walter Kaminsky Hans Wolfgang Spiess, Manfred Wilhelm, Macromol. Chem. Phys. 2006, 207, 382; Matthew Parkinson, Katja Klimke, Hans Wolfgang Spiess, Manfred Wilhelm, Macromol. Chem. Phys. 2007, 208, 2128; Patrice Castignolles, Robert Graf, Matthew Parkinson, Manfred Wilhelm, Marianne Gaborieau:, Polymer 2009, 50, 2373; M. Pollard, K. Klimke, R. Graf, H. W. Spiess, M. Wilhelm, O. Sperber, C. Piel, W. Kaminsky, Macromolecules 2004, 37, 813; Xenia Filip, Carmen Tripon, Claudiu Filip, J. Magn. Reson. 2005, 176, 239; John M. Griffin, Carmen Tripon, Ago Samoson, Claudiu Filip, Steven P. Brown, Mag. Res. in Chem. 2007, 45(S1), S198; J. Randall Rev. Macromol. Chem. Phys. 1989, C29, 201.

**Melt Flow Rate**

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The $MFR_2$ of the polypropylene is determined at a temperature of 230 °C and a load of 2.16 kg. **Calculation** of melt flow rate $MFR_2$ (230 °C) of the second polypropylene (PP2):

$$MFR(PP2) = 10^{\left[\frac{\log(MFR(PP)) - w(PP1)\, x \log(MFR(PP1))}{w(PP2)}\right]}$$

wherein

w(PP1) is the weight fraction [in wt.-%] of the first polypropylene (PP1),
w(PP2) is the weight fraction [in wt.-%] of the second polypropylene (PP2),
MFR(PP1) is the melt flow rate $MFR_2$ (230 °C) [in g/10min] the first polypropylene (PP1),
MFR(PP) is the melt flow rate $MFR_2$ (230 °C) [in g/10min] of the reactor powder of the polypropylene (PP),
MFR(PP2) is the calculated melt flow rate $MFR_2$ (230 °C) [in g/10min] of the second polypropylene (PP2).

**Molecular weight**

Molecular weight averages (Mz, Mw and Mn) and Molecular weight distribution (MWD), i.e. Mw/Mn, were determined by Gel Permeation Chromatography (GPC) according to ISO 16014-4:2003 and ASTM D 6474-99 using the following formulas:

$$M_n = \frac{\sum_{i=1}^{N} A_i}{\sum(A_i/M_i)}$$

$$M_w = \frac{\sum_{i=1}^{N} (A_i\, x\, M_i)}{\sum A_i}$$

$$M_z = \frac{\sum_{i=1}^{N} \left(A_i\, x\, M_i^2\right)}{\sum(A_i/M_i)}$$

where Ai and Mi are the chromatographic peak slice area and polyolefin molecular weight (MW).

A PolymerChar GPC instrument, equipped with infrared (IR) detector was used with 3 x Olexis and 1x Olexis Guard columns from Polymer Laboratories and 1,2,4-trichlorobenzene (TCB, stabilized with 250 mg/l 2,6-Di-tert-butyl-4-methyl-phenol) as solvent at 160 °C and at a constant flow rate of 1 ml/min. 200 μL of sample solution were injected per analysis. The column set was calibrated using universal calibration (according to ISO 16014-2:2003) with at least 15 narrow MWD polystyrene (PS) standards in the range of 0.5 kg/mol to 11500 kg/mol. Mark Houwink constants used for PS, PE and PP are as described per ASTM D 6474-99. All samples were prepared by dissolving 5.0 to 9.0 mg of polymer in 8 ml (at 160 °C) of stabilized TCB (same as mobile phase) for 2.5 hours for PP or 3 hours for PE at 160 °C under continuous gentle shaking in the autosampler of the GPC instrument.

**The xylene soluble fraction at room temperature (XCS, wt.%):**

The amount of the polymer soluble in xylene was determined at 25 °C according to ISO 16152; 5th edition; 2005-07-01.

**DSC analysis, melting peak temperature ($T_{p,m}$) and heat of fusion ($H_f$), crystallization peak temperature ($T_{p,c}$) and heat of crystallization ($H_c$): measured with a TA Instrument** Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225°C. Highest crystallization peak temperature ($T_{p,c}$) and heat of crystallization ($H_c$) are determined from the cooling step, while highest melting peak temperature ($T_{p,m}$) and heat of fusion ($H_f$) are determined from the second heating step.

**Flexural Modulus**

The Flexural Modulus was determined according to ISO 178 method A (3-point bending test) on 80×10×4 mm specimens. Following the standard, a test speed of 2 mm/min and a span length of 16 times the thickness was used. The testing temperature was 23±2° C. Injection moulding was carried out according to ISO 19069-2 using a melt temperature of 200°C for all materials irrespective of material melt flow rate.

**Haze**

Haze was determined according to ASTM D1003-00 on 60x60x1 $mm^3$ plaques injection molded in line with EN ISO 1873-2 using a melt temperature of 230°C.

**Charpy notched impact strength (NIS)**

The Charpy notched impact strength (NIS) was measured according to ISO 179 1eA at +23 °C, using injection moulded bar test specimens of 80x10x4 mm prepared in accordance with EN ISO 1873-2.

**B. Preparation of polypropylene composition**

Catalyst for the inventive examples

***Catalyst complex***

The following metallocene complex has been used as described in WO 2019/179959:

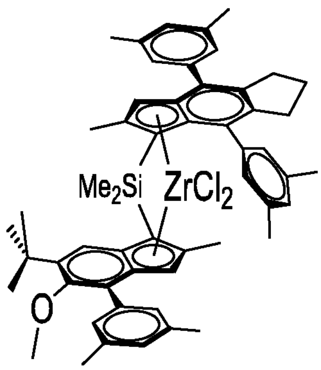

Preparation of MAO-silica support

A steel reactor equipped with a mechanical stirrer and a filter net was flushed with nitrogen and the reactor temperature was set to 20°C. Next silica grade DM-L-303 from AGC Si-Tech Co, pre-calcined at 600°C (5.0 kg) was added from a feeding drum followed by careful pressuring and depressurising with nitrogen using manual valves. Then toluene (22 kg) was added. The mixture was stirred for 15 min. Next 30 wt.% solution of MAO in toluene (9.0 kg) from Lanxess was added via feed line on the top of the reactor within 70 min. The reaction mixture was then heated up to 90°C and stirred at 90°C for additional two hours. The slurry was allowed to settle and the mother liquor was filtered off. The catalyst was washed twice with toluene (22 kg) at 90°C, following by settling and filtration. The reactor was cooled off to 60°C and the solid was washed with heptane (22.2 kg). Finally MAO treated $SiO_2$ was dried at 60°C under nitrogen flow for 2 hours and then for 5 hours under vacuum (-0.5 barg) with stirring. MAO treated support was collected as a free-flowing white powder found to contain 12.2% Al by weight.

***Single site catalyst system* 1 *(SSCS1) preparation***

30 wt.% MAO in toluene (0.7 kg) was added into a steel nitrogen blanked reactor via a burette at 20 °C. Toluene (5.4 kg) was then added under stirring. The metallocene complex as described above (93 g) was added from a metal cylinder followed by flushing with 1 kg toluene. The mixture was stirred for 60 minutes at 20°C. Trityl tetrakis(pentafluorophenyl) borate (91 g) was then added from a metal cylinder followed by a flush with 1 kg of toluene. The mixture was stirred for 1 h at room temperature. The resulting solution was added to a stirred cake of MAO-silica support prepared

as described above over 1 hour. The cake was allowed to stay for 12 hours, followed by drying under $N_2$ flow at 60°C for 2 h and additionally for 5 h under vacuum (-0.5 barg) under stirring stirring.

Dried catalyst was sampled in the form of pink free flowing powder containing 13.9% Al and 0.11% Zr.

**Table 1: Polymerization conditions**

| **Polymer** | | Poly1 |
|---|---|---|
| Catalyst | | SSCS1 |
| **Prepoly reactor** | | |
| Temp. | [°C] | 20 |
| Press. | [kPa] | 4756 |
| Residence time | [h] | 0.33 |
| **Loop reactor** | | |
| Temp. | [°C] | 68 |
| Press. | [kPa] | 4923 |
| Feed H2/C3 ratio | [mol/kmol] | 0.13 |
| Feed C4/C3 ratio | [mol/kmol] | 44.0 |
| Polymer Split* | [wt.-%] | 47 |
| $MFR_2$* | [g/10 min] | 24 |
| Total C4* | [wt.-%] | 4.4 |
| Total C4* | [mol-%] | 3.3 |
| XCS* | [wt.-%] | 0.3 |
| **GPR (F2)** | | |
| Temp. | [°C] | 80 |
| Press. | [kPa] | 2500 |
| H2/C3 ratio | [mol/kmol] | 1.6 |
| C4/C3 ratio | [mol/kmol] | 38.0 |
| Polymer Split | [wt.-%] | 53 |
| C4** | [wt.-%] | 6.7 |
| C4** | [mol-%] | 5.11 |
| $MFR_2$*** | [g/10 min] | 19 |
| **Pellet** | | |
| $MFR_2$ | [g/10 min] | 21 |
| Total C4 | [wt.-%] | 5.6 |
| Total C4 | [mol-%] | 4.3 |
| 2,1 erythro | [mol-%] | 0.61 |
| XCS | [wt.-%] | 0.4 |

* "$MFR_2$", "Total C4", "XCS" and "Polymer Split" are measured in the loop reactor, i.e. is the combination of Prepoly Reactor and Loop reactor and considered as the first propylene copolymer fraction (F1)
** "C4" is calculated from the "Total C4" measured in the loop reactor and "Total C4" measured from the pellet
*** "$MFR_2$" is calculated from the $MFR_2$ measured in the loop reactor and the $MFR_2$ of the pellet using the formula given above defining the measurement of $MFR_2$

**Table 2: Polypropylene composition**

| | | IE1 | CE1 | CE2 | CE3 |
|---|---|---|---|---|---|
| Poly1 | [wt.-%] | 97.66 | - | - | - |
| Poly2 | [wt.-%] | 2.00 | 100 | - | - |
| Poly3 | [wt.-%] | - | - | 100 | - |
| Poly4 | [wt.-%] | - | - | - | 100 |
| AO1 | [wt.-%] | 0.05 | - | - | - |
| AO2 | [wt.-%] | 0.05 | - | - | - |
| CS | [wt.-%] | 0.04 | - | - | - |
| AN1 | [wt.-%] | 0.2 | - | - | - |
| C4 | [mol-%] | 4.3 | 0 | 0 | 0 |
| C2 | [mol-%] | 0 | 0 | 0 | 5.8 |
| XCS | [wt.-%] | 0.4 | 1.5 | 2.0 | 6.5 |
| 2,1 erythro | [mol-%] | 0.60 | 0.0 | 0.0 | 0.0 |
| MWD | [-] | 2.6 | 5.8 | 4.0 | 5.6 |
| $MFR_2$ | [g/10min] | 21 | 20 | 19 | 30 |
| $T_{p,c}$ | [°C] | 118.0 | 129 | 111 | 122 |
| $T_{p,m}$ | [°C] | 145.5 | 165 | 161 | 150 |
| FM | [MPa] | 1359 | 2000 | 1220 | 1050 |
| Haze | [%] | 9.0 | 57 | 35 | 20 |
| FM/haze | [MPa/%] | 151 | 35 | 35 | 53 |
| Charpy NIS (23 °C) | [kJ/m$^2$] | 3.7 | 2.5 | 2.2 | 5.5 |

"FM" is the flexural modulus;
"Poly2" is the commercial alpha-nucleated polypropylene homopolymer "HF955MO" of BorealisAG;
"Poly3" is the commercial polypropylene homopolymer "HF420FB" of Borealis AG
"Poly4" is the commercial alpha-nucleated propylene-ethylene copolymer "BorePure RG466MO" of Borealis AG;
"AO1" is the sterically hindered phenol pentaerythrityl-tetrakis(3-(3',5'-di-tert. butyl-4-hydroxyphenyl)-propionate "Irganox 1010" of BASF
"AO2" is the phosphorous based antioxidant tris (2,4-di-t-butylphenyl) phosphite "Irgafos 168" of BASF
"CS" is calcium stearate
"AN1" is the commercial alpha-nucleating agent Millad 3988 of Milliken containing bis-(3,4-dimethylbenzylidene)-sorbitol (DMDBS);

### C. Preparation of lunch boxes

Lunch boxes of an outer dimension of 160.9 × 130.0 × 69.1 mm$^3$ having rounded corners and edges as shown in Figure 1 were produced by injection molding. Said lunch boxes consist of a lower half of 35.3 mm height and an upper part of 33.8 mm height, connected with a first living hinge in position A' and equipped with a closure including a second living hinge in position A according to Figure 1. The wall thickness of said lunch box is 1.54 mm, and the first and second living hinges have a thickness of 0.30 mm. The mould is equipped with a single point gate and yields the boxes in an open position, allowing testing of the first living hinge connecting the halves in an un-deformed state. An Engel ES 1350/350 HL injection moulding machine was used for production, setting a melt temperature of 260 °C, a mould temperature of 25 °C and a filling velocity of 119 cm$^3$/s. This gave a filling time of approximately 1 s, followed by a holding time of 5 s with a holding pressure of 493 bar, and a cooling time before ejection of 12 s. The lunch boxes were stored in open position at 23 °C for at least 96 h prior to testing.

Top load test

For this test, five of the lunch boxes per material were closed and the closure snapped in. Compression test according to DIN 55526-1991 was performed on each box with attest speed of 10 mm/min up to a deformation of 20 mm. The maximum compression force and the deformation at maximum were recorded and the average of the five results calculated.

Hinge strength test

For this test, specimens for an adapted tensile test were cut from the first living hinge side of five lunch boxes per material. The specimens were first cut to a width of 11 mm with a band saw parallel to the A-A' cross section plane in the central part of the hinge, leaving a 10 mm long plane part of full wall thickness on both sides for clamping. To avoid edge disturbance, the specimens were then trimmed by cutting and milling to a width of 10 mm. The resulting specimens were subjected to a normal tensile test according to ISO 527-1 on a Zwick Z100-725333 machine, using a strain rate of 1 mm/min and testing up to the breakage of the specimen. The stress and extension resp. strain at break were recorded and the average of the five results calculated.

**Table 3: Lunch box properties**

| | **Top load test** | | **Hinqe strength test** | | |
|---|---|---|---|---|---|
| | **Fmax** | **Smax** | **StrB** | **ExtB** | **Fmax*StrB** |
| | [N] | [mm] | [MPa] | [%] | [N*MPa] |
| **IE1** | 4052 | 17.8 | 24.8 | 98.6 | 100653 |
| **CE1** | 5445 | 18.0 | 14.8 | 49.1 | 80799 |
| **CE2** | 3960 | 18.2 | 17.5 | 60.7 | 69423 |
| **CE3** | 3053 | 14.7 | 24.7 | 130.9 | 75409 |

Experience shows that the stress and strain at break in a tensile test of a living hinge are proportional to the long-term stability of said hinge, i.e. the number of time which the hinge can be flexed without damage or break. The data of Table 3 consequently show the improved property balance between top load and hinge stability for the inventive example over all of the comparative examples. This good performance is combined with low haze and very low xylene solubles content, as can be seen from the data in Table 2.

## Claims

**1.** A living hinge consisting of a polypropylene composition comprising

(a) at least 95.0 wt.-%, based on the total weight of the polypropylene composition, of a propylene copolymer, said propylene copolymer has a comonomer selected from the group consisting of 1-butene, 1-hexene and 1-octene, preferably said propylene copolymer is a 1-butene-propylene copolymer, and
(b) 0.01 to 1.0 wt.-%, based on the total weight of the polypropylene composition, of an alpha-nucleating agent,

wherein further the polypropylene composition has

(i) a comonomer content, measured by $^{13}$C-NMR, in the range of 2.0 to 6.5 mol-%, the comonomer is selected from the group consisting of 1-butene, 1-hexene and 1-octene, preferably the comonomer is 1-butene,
(ii) 2,1 erythro regio-defects, measured by $^{13}$C NMR, in the range of >0.35 to 0.85 mol-%, and
(iii) a melt flow rate $MFR_2$ (230 °C; 2.16 kg), measured according to ISO 1133, in the range of 15 to 100 g/10min.

**2.** A living hinge according to claim 1, wherein the polypropylene composition has a molecular weight distribution (MWD) determined by Gel Permeation Chromatography (GPC) in the range of 2.2 to 3.5.

**3.** A living hinge according to claim 1 or 2, wherein the polypropylene composition is monophasic and optionally has a xylene cold soluble (XCS) fraction, determined at 25 °C according to ISO 16152, in the range of 0.1 to 1.0 wt.-%.

**4.** A living hinge according to any one of the preceding claims, wherein the polypropylene composition

(a) has a highest melting peak temperature Tp,m measured by DSC (scan rate of 10 °C/min; second heating step) in the range of 140 to 152 °C, and
(b) complies with the equation 1

$$24\,°C < Tp,m - Tp,c < 32\,°C \quad (1)$$

wherein

"$T_{p,m}$" is the highest melting peak temperature $T_{p,m}$ [°C] measured by DSC (scan rate of 10 °C/min; second heating step) of the polypropylene composition and
"$T_{p,c}$" is the highest crystallization peak temperature $T_{p,c}$ [°C] measured by DSC (scan rate of 10 °C/min, cooling step) of the polypropylene composition.

**5.** A living hinge according to any one of the preceding claims, wherein the propylene copolymer has

(a) a comonomer content, measured by $^{13}C$-NMR, in the range of 2.0 to 6.5 mol-%, and
(b) 2,1 erythro regio-defects in the range of >0.35 to 0.85 mol-%, measured by $^{13}C$ NMR.

**6.** A living hinge according to any one of the preceding claims, wherein the propylene copolymer comprises

(a) a first propylene copolymer fraction (F1) having a comonomer content, measured by $^{13}C$-NMR, in the range of 2.0 to 6.5 mol-%, and
(b) a second propylene copolymer fraction (F2),

wherein

- the comonomer for the first propylene copolymer fraction (F1) and the second propylene copolymer (F2) is the same, but the amount of comonomer in the first propylene copolymer (F1) and second propylene copolymer (F2) is different;
- the weight ratio between the first propylene copolymer fraction (F1) and the second propylene copolymer fraction (F2) [(F1)/(F2)] is in the range of 60/40 to 40/60, and
- the total amount of the first propylene copolymer fraction (F1) and the second propylene copolymer fraction (F2) together, based on the propylene copolymer, is at least 98 wt.-%, preferably the propylene copolymer consists of the first propylene copolymer fraction (F1) and the second propylene copolymer fraction (F2).

**7.** A living hinge according to claim 6, wherein the propylene copolymer complies with the equation 2

$$\frac{C\,(PPC)}{(C\,(F1)\;x\;[(F1)/(PPC)])} > 2.50$$

wherein

"C (PPC)" is the comonomer content [mol-%], measured by $^{13}C$ NMR, of the propylene copolymer;
"C (F1)" is the comonomer content [mol-%], measured by $^{13}C$ NMR, of the first propylene copolymer fraction (F1);
"(F1)/(PPC)" is the amount of the first propylene copolymer fraction (F1) in the propylene copolymer divided by the amount of the propylene copolymer,
and optionally
the comonomer content between the first propylene copolymer fraction (F1) and the second propylene copolymer fraction (F2) differs in the range of 1.0 to 2.5 mol-%.

**8.** A living hinge according to any one of the preceding claims, wherein the polypropylene composition comprises further one or more propylene homopolymer(s), preferably comprises further one or more propylene homopolymer(s) having a melt flow rate $MFR_2$ (230 °C; 2.16 kg), measured according to ISO 1133, in the range of 1.0 to 25.0 g/10min and optionally a highest melting peak temperature $T_{p,m}$ measured by DSC (scan rate of 10 °C/min; second heating

step) in the range of 162 to 169 °C, wherein the total amount of the one or more propylene homopolymer(s), based on the total amount of the polypropylene composition, is in the range of 0.5 to 3.0 wt.-%.

**9.** A living hinge according to any one of the preceding claims, wherein the alpha-nucleating agent is selected from the group consisting of polymeric nucleating agent, sorbitol-based nucleating agent, nonitol-based nucleating agent and/or benzene-trisamide-based nucleating agent.

**10.** A living hinge according to any one of the preceding claims, wherein the living hinge is obtained by injection molding the polypropylene composition as defined in the preceding claims and said living hinge has a thickness in the range of 0.05 to 0.50 mm.

**11.** Injection molded article comprising two rigid pieces which are connected by one or more living hinge(s), wherein

the injection molded article consists of the polypropylene composition as defined in any one of the preceding claims 1 to 9 and
the injection molded article is made as a single piece,
wherein further preferbly the one or more living hinge(s) has/have a wall thickness in the range of 0.05 to 0.50 mm.

**12.** Injection molded article according to claim 11 being a thin wall injection molded article, wherein the thin wall injection molded article has a wall thickness in the range of 0.05 to 2.00 mm.

**13.** Injection molded article according to claim 11 or 12, wherein the two rigid pieces are compartments which are connected by one or more living hinge(s), preferably said injection molded article is a storage box, wherein preferably the two compartments have a wall thickness in the range of 0.06 to 2.00 mm and the one or more living hinge(s) have/has a wall thickness in the range of 0.05 to 0.50 mm.

**14.** Injection molded article according to claim 11 being a hinge cap, wherein one rigid piece is the cap and the other rigid piece is the mount.

**15.** Use of the polypropylene composition as defined in any one of the preceding claims 1 to 10 for the manufacture of a living hinge or an injection molded article including one or more living hinge(s), wherein preferably the injection molded article is a thin wall injection molded article having a wall thickness in the range of 0.05 to 2.00 mm.

## Patentansprüche

**1.** Ein Filmscharnier bestehend aus einer Polypropylen Zusammensetzung umfassend

(a) mindestens 95,0 Gew.-%, basierend auf dem Gesamtgewicht der Polypropylen Zusammensetzung, von einem Propylen Copolymer, wobei besagtes Propylen Copolymer ein Comonomer ausgewählt aus der Gruppe bestehend aus 1-Buten, 1-Hexen und 1-Octen hat, bevorzugt ist besagtes Propylen Copolymer ein 1-Buten-Propylen Copolymer, und
(b) 0,01 bis 1,0 Gew.-%, basierend auf dem Gesamtgewicht der Polypropylen Zusammensetzung, von einem alpha-Nukleierungsmittel,

wobei die Polypropylen Zusammensetzung des Weiteren

(i) einen Comonomer Gehalt, gemessen mit $^{13}$C-NMR, in einem Bereich von 2,0 bis 6,5 mol-%, wobei das Comonomer ausgewählt ist aus der Gruppe bestehend aus 1-Buten, 1-Hexen und 1-Octen, bevorzugt ist das Comonomer 1-Buten,
(ii) 2,1 Erythro Regiodefekte, gemessen mit $^{13}$C-NMR, in einem Bereich von >0,35 bis 0,85 mol-%, und
(iii) eine Schmelzflussrate $MFR_2$ (230 °C; 2,16 kg), gemessen gemäß ISO 1133, in einem Bereich von 15 bis 100 g/10min,

hat.

**2.** Das Filmscharnier gemäß Anspruch 1, wobei die Polypropylen Zusammensetzung eine Molmassenverteilung (MMV) ermittelt durch Gel Permeations Chromatographie (GPC) ein einem Bereich von 2,2 bis 3,5 hat.

**3.** Das Filmscharnier gemäß Anspruch 1 oder 2, wobei die Polypropylen Zusammensetzung einphasig ist und optional eine kaltlösliche Xylol-Fraktion (XCS), ermittelt bei 25 °C gemäß ISO 16152, in einem Bereich von 0,1 bis 1,0 Gew.-% hat.

**4.** Das Filmscharnier gemäß einem der vorherigen Ansprüche, wobei die Polypropylen Zusammensetzung

(a) eine höchste Schmelzpunkttemperatur Tp,m gemessen mit DSC (Scanrate von 10 °C/min; zweiter Heizschritt) in einem Bereich von 140 bis 152 °C hat, und
(b) Gleichung 1 erfüllt

$$24\,°C < Tp,m - Tp,c < 32\,°C \quad (1)$$

wobei

"$T_{p,m}$" die höchste Schmelzpunkttemperatur $T_{p,m}$ [°C] gemessen mit DSC (Scanrate von 10 °C/min; zweiter Heizschritt) der Polypropylen Zusammensetzung ist, und
"$T_{p,c}$" die höchste Kristallisationspunkttemperatur $T_{p,c}$ [°C] gemessen mit DSC (Scanrate von 10 °C/min; Abkühlschritt) der Polypropylen Zusammensetzung ist.

**5.** Das Filmscharnier gemäß einem der vorherigen Ansprüche, wobei das Propylen Copolymer

(a) einen Comonomer Gehalt, gemessen mit $^{13}C$-NMR, in einem Bereich von 2,0 bis 6,5 mol-%, und
(b) 2,1 Erythro Regiodefekte in einem Bereich von >0,35 bis 0,85 mol-%, gemessen mit $^{13}C$ NMR,

hat.

**6.** Das Filmscharnier gemäß einem der vorherigen Ansprüche, wobei das Propylen Copolymer

(a) eine erste Propylen Copolymer Fraktion (F1) mit einem Comonomer Gehalt, gemessen mit $^{13}C$-NMR, in einem Bereich von 2,0 bis 6,5 mol-%, und
(b) eine zweite Propylen Copolymer Fraktion (F2),

umfasst, wobei

- das Comonomer der ersten Propylen Copolymer Fraktion (F1) und der zweiten Propylen Copolymer Fraktion (F2) das Gleiche ist, aber die Menge an Comonomer in der ersten Propylen Copolymer Fraktion (F1) und in der zweiten Propylen Copolymer Fraktion (F2) unterschiedlich ist;
- das Gewichtsverhältnis zwischen der ersten Propylen Copolymer Fraktion (F1) und der zweiten Propylen Copolymer Fraktion (F2) [(F1)/(F2)] in einem Bereich von 60/40 bis 40/60 ist, und
- die Gesamtmenge der ersten Propylen Copolymer Fraktion (F1) und der zweiten Propylen Copolymer Fraktion (F2) zusammen, basierend auf dem Propylen Copolymer, mindestens 98 Gew.-% ist, bevorzugt das Propylen Copolymer aus der ersten Propylen Copolymer Fraktion (F1) und der zweiten Propylen Copolymer Fraktion (F2) besteht.

**7.** Das Filmscharnier gemäß Anspruch 6, wobei das Propylen Copolymer die Gleichung 2 erfüllt

$$\frac{C\,(PPC)}{(C\,(F1)\,x\,[(F1)/(PPC)])} > 2{,}50$$

wobei

"C (PPC)" der Comonomer Gehalt [mol-%], gemessen mit $^{13}C$ NMR, des Propylen Copolymers ist;
"C (F1)" der Comonomer Gehalt [mol-%], gemessen mit $^{13}C$ NMR, der ersten Propylen Copolymer Fraktion (F1) ist;
"(F1)/(PPC)" die Menge der ersten Propylen Copolymer Fraktion (F1) in dem Propylen Copolymer geteilt durch die Menge des Propylen Copolymers ist, und optional

sich der Comonomer Gehalt der ersten Propylen Copolymer Fraktion (F1) von der zweiten Propylen Copolymer Fraktion (F2) in einem Bereich von 1,0 bis 2,5 mol-% unterscheidet.

**8.** Das Filmscharnier gemäß einem der vorherigen Ansprüche, wobei die Polypropylen Zusammensetzung zusätzlich ein oder mehrere Propylen Homopolymer(e) umfasst, bevorzugt umfasst sie zusätzlich ein oder mehrere Propylen Homopolymer(e) mit einer Schmelzflussrate $MFR_2$ (230 °C; 2.16 kg), gemessen gemäß ISO 1133, in einem Bereich von 1,0 bis 25,0 g/10min und optional mit einer höchsten Schmelzpunkttemperatur gemessen mit DSC (Scanrate von 10 °C/min; zweiter Heizschritt) in einem Bereich von 162 bis 169 °C, wobei die Gesamtmenge des einen oder mehreren Propylen Homopolymer(s), basierend auf der Gesamtmenge der Polypropylen Zusammensetzung, in einem Bereich von 0,5 bis 3,0 Gew.-% ist.

**9.** Das Filmscharnier gemäß einem der vorherigen Ansprüche, wobei das alpha-Nukleierungsmittel ausgewählt ist aus der Gruppe bestehend aus einem Polymer Nukleierungsmittel, Sorbitol-basiertem Nukleierungsmittel, Nonitol-basiertem Nukleierungsmittel und/oder Benzol-Trisamid-basiertem Nukleierungsmittel.

**10.** Das Filmscharnier gemäß einem der vorherigen Ansprüche, wobei das Filmscharnier durch Spritzgießen der Polypropylen Zusammensetzung, wie in einem der vorherigen Ansprüchen definiert, erhalten wird und besagtes Filmscharnier eine Dicke in einem Bereich von 0,05 bis 0,50 mm hat.

**11.** Ein Spritzgussartikel umfassend zwei rigide Stücke, welche durch ein oder mehrere Filmscharnier(e) verbunden sind, wobei

der Spritzgussartikel aus der Polypropylen Zusammensetzung, wie in einem der vorherigen Ansprüche 1 bis 9 definiert, besteht und
der Spritzgussartikel wie ein einziges Stück gemacht ist,
wobei außerdem das eine oder die mehreren Filmscharnier(e) bevorzugt eine Wanddicke in einem Bereich von 0,05 bis 0,50 mm hat/haben.

**12.** Der Spritzgussartikel gemäß Anspruch 11, wobei der Artikel ein Dünn-Wand Spritzgussartikel ist, wobei der Dünn-Wand Spritzgussartikel eine Wanddicke in einem Bereich von 0,05 bis 2,00 mm hat.

**13.** Der Spritzgussartikel gemäß Anspruch 11 oder 12, wobei die zwei rigiden Stücke Fächer sind, welch mit einem oder mehreren Filmscharnier(en) verbunden sind, bevorzugt ist besagter Spritzgussartikel eine Aufbewahrungsbox, wobei bevorzugt die zwei Fächer eine Wanddicke in einem Bereich von 0,06 bis 2,00 mm haben und das eine oder die mehreren Filmscharnier(e) ein Wanddicke in einem Bereich von 0,05 bis 0,50 mm hat/haben

**14.** Der Spritzgussartikel gemäß Anspruch 11, wobei der Artikel eine Scharnierkappe ist, wobei ein rigides Stück die Kappe ist und das andere rigide Stück die Befestigung ist.

**15.** Verwendung der Polypropylen Zusammensetzung, wie in einem der vorherigen Ansprüche 1 bis 10 definiert, für die Herstellung eines Filmscharniers oder eines Spritzgussartikels umfassend ein oder mehrere Filmscharnier(e), wobei der Spritzgussartikel bevorzugt ein Dünn-Wand Spritzgussartikel mit einer Wanddicke in einem Bereich von 0,05 bis 2,00 mm ist.

## Revendications

**1.** Charnière vivante constituée d’une composition de polypropylène comprenant

(a) au moins 95,0 % en poids, sur la base du poids total de la composition de polypropylène, d’un copolymère de propylène, ledit copolymère de propylène présente un comonomère sélectionné parmi le groupe constitué de 1-butène, 1-hexène et 1-octène, de préférence, ledit copolymère de propylène est un copolymère de 1-butène-propylène, et
(b) 0,01 à 1,0 % en poids, sur la base du poids total de la composition de polypropylène, d’un agent d’alpha-nucléation,

dans laquelle la composition de polypropylène présente en outre

(i) une teneur en comonomère, mesurée par RMN $^{13}C$, dans la plage de 2,0 et 6,5 % en mole, le comonomère est sélectionné parmi le groupe constitué de 1-butène, 1-hexène et 1-octène, de préférence le comonomère est 1-butène,
(ii) des régio-défauts 2,1-érythro, mesurés par RMN $^{13}C$, dans la plage de > 0,35 à 0,85 % en mole, et
(iii) un indice de fluidité $MFR_2$ (230 °C ; 2,16 kg), mesuré selon ISO 1133, dans la plage de 15 à 100 g/10 min.

**2.** Charnière vivante selon la revendication 1, dans laquelle la composition de polypropylène présente une distribution de poids moléculaire (MWD) déterminée par chromatographie par perméation de gel (GPC) dans la plage de 2,2 à 3,5.

**3.** Charnière vivante selon la revendication 1 ou 2, dans laquelle la composition de polypropylène est monophasique et présente optionnellement une fraction soluble à froid dans le xylène (XCS), déterminée à 25 °C selon ISO 16152, dans la plage de 0,1 à 1,0 % en poids.

**4.** Charnière vivante selon l'une des revendications précédentes, dans laquelle la composition de polypropylène

(a) présente une température de pic de fusion $T_{p,m}$ la plus élevée mesurée par DSC (vitesse de balayage de 10 °C/min ; deuxième étape de chauffage) dans la plage de 140 à 152 °C, et
(b) se conforme à l'équation 1

$$24\,°C < Tp,m - Tp,c < 32\,°C \quad (1)$$

dans laquelle

« $T_{p,m}$ » est la température de pic de fusion la plus élevée $T_{p,m}$ [°C] mesurée par DSC (vitesse de balayage de 10 °C/min ; deuxième étape de chauffage) de la composition de polypropylène et
« $T_{p,c}$ » est la température de pic de cristallisation la plus élevée $T_{p,c}$ (°C] mesurée par DSC (vitesse de balayage de 10 °C/min ; étape de refroidissement) de la composition de polypropylène.

**5.** Charnière vivante selon l'une des revendications précédentes, dans laquelle le copolymère de polypropylène présente

(a) une teneur en comonomère, mesurée par RMN $^{13}C$, dans la plage de 2,0 à 6,5 % en mole, et
(b) des régio-défauts 2,1-érythro dans la plage de > 0,35 à 0,85 % en mole, mesurés par RMN $^{13}C$.

**6.** Charnière vivante selon l'une des revendications précédentes, dans laquelle le copolymère de polypropylène comprend

(a) une première fraction de copolymère de propylène (F1) présentant une teneur en comonomère, mesurée par RMN $^{13}C$, dans la plage de 2,0 à 6,5 % en mole, et
(b) une deuxième fraction de copolymère de propylène (F2),

dans laquelle

- le comonomère pour la première fraction de copolymère de propylène (F1) et le deuxième copolymère de propylène (F2) est le même, mais la quantité de comonomère dans le premier copolymère de propylène (F1) et le deuxième copolymère de propylène (F2) est différente ;
- le rapport pondéral entre la première fraction de copolymère de propylène (F1) et la deuxième fraction de copolymère de propylène (F2) [(F1) / (F2)] est dans la plage de 60/40 à 40/60, et
- la quantité totale de la première fraction de copolymère de propylène (F1) et de la deuxième fraction de copolymère de propylène (F2) ensemble, sur la base du copolymère de propylène, est d'au moins 98 % en poids, de préférence le copolymère de propylène est constitué de la première fraction de copolymère de propylène (F1) et de la deuxième fraction de copolymère de propylène (F2) .

**7.** Charnière vivante selon la revendication 6, dans laquelle le copolymère de polypropylène se conforme à l'équation 2

$$\frac{C(PPC)}{((C(F1)\ x\ [(F1)/(PPC)])} > 2{,}50$$

dans laquelle

« C (PPC) » est la teneur en comonomère [% en mole], mesurée par RMN $^{13}C$, du copolymère de propylène ;
« C (F1) » est la teneur en comonomère [% en mole], mesurée par RMN $^{13}C$, de la première fraction de copolymère de propylène (F1) ;
« (F1)/(PPC) » est la quantité de la première fraction de copolymère de propylène (F1) dans le copolymère de propylène divisée par la quantité du copolymère de propylène, et optionnellement
la teneur en comonomère entre la première fraction de copolymère de propylène (F1) et la deuxième fraction de copolymère de propylène (F2) diffère dans la plage de 1,0 à 2,5 % en mole.

**8.** Charnière vivante selon l'une des revendications précédentes, dans laquelle la composition de polypropylène comprend en outre un ou plusieurs homopolymères de propylène, comprend de préférence en outre un ou plusieurs homopolymères de propylène présentant un indice de fluidité $MFR_2$ (230 °C ; 2,16 kg), mesuré selon ISO 1133, dans la plage de 1,0 à 25,0 g/10 min et optionnellement une température de pic de fusion la plus élevée $T_{p,m}$ mesurée par DSC (vitesse de balayage de 10 °C/min ; deuxième étape de chauffage) dans la plage de 162 à 169 °C, dans laquelle la quantité totale des un ou plusieurs homopolymères de propylène, sur la base de la quantité totale de la composition de polypropylène, est dans la plage de 0,5 à 3,0 % en poids.

**9.** Charnière vivante selon l'une des revendications précédentes, dans laquelle l'agent d'alpha-nucléation est sélectionné parmi le groupe constitué d'un agent de nucléation polymère, agent de nucléation à base de sorbitol, agent de nucléation à base de nonitol et/ou agent de nucléation à base de benzène-trisamide.

**10.** Charnière vivante selon l'une des revendications précédentes, dans laquelle la charnière vivante est obtenue par moulage par injection de la composition de polypropylène telle que définie dans les revendications précédentes et ladite charnière vivante présente une épaisseur dans la plage de 0,05 à 0,50 mm.

**11.** Article moulé par injection comprenant deux pièces rigides qui sont reliées par une ou plusieurs charnières vivantes, dans lequel

l'article moulé par injection est constitué de la composition de polypropylène telle que définie dans l'une des revendications précédentes 1 à 9 et
l'article moulé par injection est réalisé sous forme d'une seule pièce,
dans lequel, de préférence en outre, les une ou plusieurs charnières vivantes présentent une épaisseur de paroi dans la plage de 0,05 à 0,50 mm.

**12.** Article moulé par injection selon la revendication 11, qui est un article moulé par injection à paroi mince, dans lequel l'article moulé par injection à paroi mince présente une épaisseur de paroi dans la plage de 0,05 à 2,00 mm.

**13.** Article moulé par injection selon la revendication 11 ou 12, dans lequel les deux pièces rigides sont des compartiments qui sont reliés par une ou plusieurs charnières vivantes, de préférence ledit article moulé par injection est une boîte de rangement, dans lequel de préférence les deux compartiments présentent une épaisseur de paroi dans la plage de 0,06 à 2,00 mm et les une ou plusieurs charnières vivantes présentent une épaisseur de paroi dans la plage de 0,05 à 0,50 mm.

**14.** Article moulé par injection selon la revendication 11, qui est un capuchon à charnière, dans lequel une pièce rigide est le capuchon et l'autre pièce rigide est le support.

**15.** Utilisation de la composition de polypropylène telle que définie dans l'une des revendications précédentes 1 à 10 pour la fabrication d'une charnière vivante ou d'un article moulé par injection comportant une ou plusieurs charnières vivantes, dans laquelle, de préférence, l'article moulé par injection est un article moulé par injection à paroi mince présentant une épaisseur de paroi dans la plage de 0,05 à 2,00 mm.

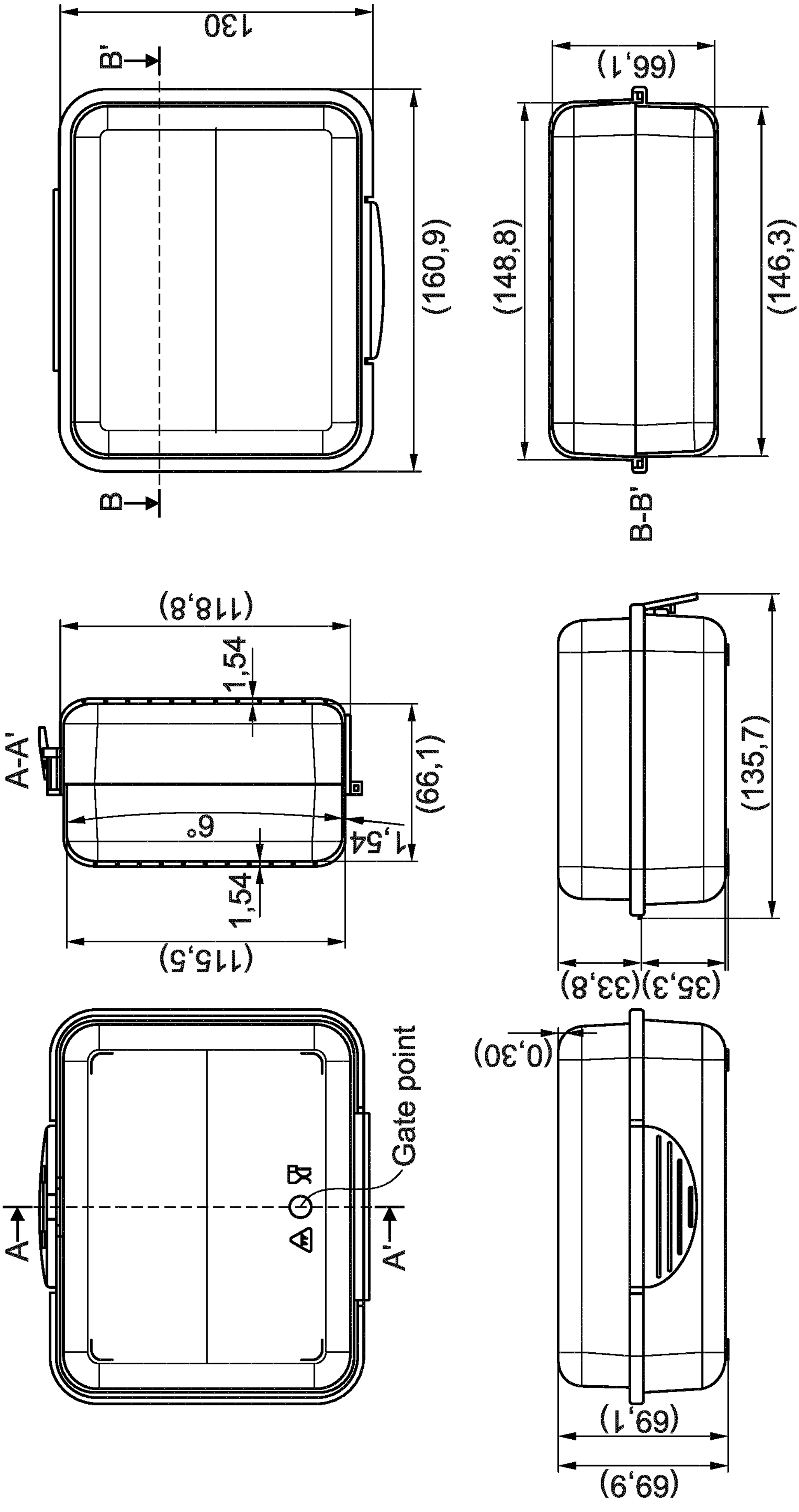


Fig. 1: Lunch box

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2439238 A1
- WO 2019179959 A
- WO 9414856 A
- WO 9512622 A
- WO 2006097497 A
- WO 03051934 A
- EP 0887379 A
- WO 9212182 A
- WO 2004000899 A
- WO 2004111095 A
- WO 9924478 A
- WO 9924479 A
- WO 0068315 A
- WO 2015082379 A
- WO 2015011134 A
- US 4582816 A
- US 3405109 A
- US 3324093 A
- EP 479186 A
- US 5391654 A
- EP 887379 A
- EP 887380 A
- EP 887381 A
- EP 991684 A


### Non-patent literature cited in the description


- **NELLO PASQUINI.** Polypropylene Handbook. 422-442
- **HANS ZWEIFEL.** Plastics Additives Handbook. 967-990
- **NELLO PASQUINI.** Polypropylene Handbook. 17, , 18
- **KATJA KLIMKE ; MATTHEW PARKINSON ; CHRISTIAN PIEL ; WALTER KAMINSKY ; HANS WOLFGANG SPIESS ; MANFRED WILHELM.** *Macromol. Chem. Phys.,* 2006, vol. 207, 382
- **MATTHEW PARKINSON ; KATJA KLIMKE ; HANS WOLFGANG SPIESS ; MANFRED WILHELM.** *Macromol. Chem. Phys.,* 2007, vol. 208, 2128
- **PATRICE CASTIGNOLLES ; ROBERT GRAF ; MATTHEW PARKINSON ; MANFRED WILHELM ; MARIANNE GABORIEAU.** *Polymer,* 2009, vol. 50, 2373
- **M. POLLARD ; K. KLIMKE ; R. GRAF ; H. W. SPIESS ; M. WILHELM ; O. SPERBER ; C. PIEL ; W. KAMINSKY.** *Macromolecules,* 2004, vol. 37, 813
- **XENIA FILIP ; CARMEN TRIPON ; CLAUDIU FILIP.** *J. Magn. Reson.,* 2005, vol. 176, 239
- **JOHN M. GRIFFIN ; CARMEN TRIPON ; AGO SAMOSON ; CLAUDIU FILIP ; STEVEN P. BROWN.** *Mag. Res. in Chem.,* 2007, vol. 45 (S1), S198
- **J. RANDALL.** *Rev. Macromol. Chem. Phys.,* 1989, vol. C29, 201